# FASCICULE DE BREVET EUROPEEN

(11) **EP 3 515 854 B1**
(45) Date de publication et mention de la délivrance du brevet: **20.01.2021**
(21) Numéro de dépôt: 17748820.2
(22) Date de dépôt: 04.07.2017
(51) Int. Cl.: B66F 11/04, B60Q 1/50, B60Q 9/00

(54) **ASSISTANCE VISUELLE AU DEPLACEMENT AU SOL D'UNE NACELLE ELEVATRICE**
VISUELLE HILFE FÜR BODENBEWEGUNG EINER HEBEBÜHNE
VISUAL ASSISTANCE TO THE ON-GROUND MOVEMENT OF A LIFTING PLATFORM

(30) Priorité: 21.09.2016 FR 1658887
(43) Date de publication de la demande: 31.07.2019
(73) Titulaire: Haulotte Group, 42420 Lorette (FR)
(72) Inventeur: LUMINET, Philippe, 69001 Lyon (FR); DITTUS, Sebastian, 69440 Mornant (FR); VIAOUËT, Clément, 69003 Lyon (FR)
(74) Mandataire: Reinhardt, Yves
(86) Numéro de dépôt international: PCT/FR2017/051818
(87) Numéro de publication internationale: WO 2018/055246

(56) Documents cités:
- WO-A1-2011/109897
- DE-A1-102006 002 960
- FR-A1- 2 909 084
- US-A1- 2014 054 254
- US-B2- 7 194 358

## Description

La présente invention concerne le domaine des plates-formes élévatrices mobiles de personnel (désignées aussi par l'acronyme PEMP) encore communément appelées nacelles élévatrices.

Les nacelles élévatrices sont des machines destinées à permettre à une ou plusieurs personnes de travailler en hauteur. Elles comprennent classiquement un châssis, une structure élévatrice montée sur le châssis et supportant une plate-forme de travail destinée à recevoir les personnes et du matériel.

La structure élévatrice permet d'élever la plate-forme de travail depuis une position abaissée sur le châssis jusqu'à une position de travail en hauteur et vice-versa. Concernant les nacelles élévatrices dites « à bras », la structure élévatrice comprend souvent une tourelle montée pivotante sur le châssis et sur laquelle est montée un bras supportant la plate-forme de travail, ce qui permet de changer l'orientation du bras - et donc aussi de la plate-forme de travail - par rapport au châssis. Le bras de la structure élévatrice est articulé sur la tourelle et est télescopique : ce type de nacelle élévatrice est communément dénommé « nacelle télescopique ». La partie inférieure du bras qui est montée sur la tourelle peut en outre comprendre deux ou plusieurs segments articulés entre eux qui supportent la partie supérieure du bras qui est télescopique : ce type de nacelle élévatrice est communément dénommé « nacelle articulée ». Des vérins hydrauliques permettent de déployer le bras.

Souvent la structure élévatrice comprend aussi un bras plus court - appelé communément pendulaire - à une extrémité duquel est montée la plate-forme de travail et qui permet de déplacer celle-ci localement en hauteur. Il permet généralement aussi de modifier localement l'orientation de la plate-forme de travail grâce à une liaison pivot d'axe vertical entre l'extrémité du pendulaire et la plate-forme de travail et parfois également entre l'autre extrémité du pendulaire et le bras principal de la structure élévatrice.

Par ailleurs, le châssis est souvent motorisé et équipé de roues ou de chenilles pour déplacer la nacelle élévatrice au sol en avant ou en arrière.

Un pupitre de commande est généralement agencé sur la plate-forme de travail. Il permet à un opérateur à bord de la plate-forme de commander la structure élévatrice pour atteindre la position de travail en hauteur souhaitée et pour l'abaisser à nouveau sur le châssis. Généralement, il lui permet aussi de commander le déplacement de la nacelle élévatrice au sol vers l'avant et vers l'arrière. Souvent le poste de commande est pourvu à cette fin d'une poignée de commande articulée à la façon d'une colonne de commande aéronautique : le fait de l'incliner vers soi, respectivement à l'opposé de soi, enclenche le déplacement de la nacelle élévatrice au sol vers l'arrière, respectivement vers l'avant.

Lorsque l'opérateur à bord de la plate-forme souhaite déplacer la nacelle élévatrice au sol, il existe un risque qu'il soit désorienté et confonde les directions de déplacement avant et arrière. Cela est dû au fait que la plate-forme peut être dans une orientation quelconque par rapport au châssis du fait que, comme mentionné auparavant, l'orientation de la plate-forme par rapport au châssis peut être modifiée selon le cas par la tourelle et le pendulaire. Ce risque est d'autant plus avéré que la tourelle peut généralement pivoter sans limitation d'angle par rapport au châssis ou du moins sur un débattement angulaire très supérieur à 180°. Par exemple, dans le cas où la plate-forme de travail a tourné de 180° par rapport au châssis, le sens de déplacement du châssis au sol est inversé par rapport au sens de sollicitation de la poignée de commande. En cas de confusion, l'opérateur risque de provoquer un accident en déplaçant la nacelle élévatrice dans la direction opposée à celle voulue.

Afin de limiter ce risque, il est connu en application de la norme européenne EN 280 d'apposer un marquage sous forme de deux flèches de forme et de couleur différentes à côté de la poignée de commande, une première pointant vers soi et une deuxième pointant à l'opposé de soi. Des marquages de flèches de même forme et de même couleur sont apposés sur le châssis et pointent respectivement vers l'arrière et vers l'avant du châssis afin de rappeler à l'opérateur le sens de déplacement du châssis au sol correspondant à chacune des deux directions de sollicitation de la poignée de commande.

Un inconvénient de cette solution est d'imposer à l'opérateur un effort intellectuel de comparaison des flèches apposées à côté de la poignée de commande et sur le châssis. De ce fait, les erreurs restent possibles, par exemple en cas d'inattention ou de fatigue de l'opérateur.

FR 2 909 084 A enseigne une autre solution consistant à inverser automatiquement la concordance entre la direction de sollicitation de la poignée de commande et la direction de déplacement résultant du châssis au sol en fonction de l'orientation de la plate-forme par rapport au châssis afin de les mettre en cohérence pour l'opérateur à bord de la plate-forme.

Un inconvénient de cette solution est que l'opérateur n'a pas forcément conscience de l'inversion de la concordance entre la direction de sollicitation de la poignée de commande et la direction de déplacement résultant du châssis au sol, ce d'autant plus s'il utilise régulièrement d'autres nacelles élévatrices pour lesquelles cette solution n'est pas mise en œuvre. Il subsiste donc un risque de confusion pour l'opérateur.

Une autre solution encore qui est mise en œuvre sur des nacelles élévatrices de la série S-65 commercialisées sous la marque Genie, consiste à inhiber automatiquement la commande de déplacement de la nacelle élévatrice au sol lorsque l'orientation du bras de levage de la plate-forme de travail par rapport au châssis a dépassé un angle prédéterminé. Un voyant s'allume alors sur le pupitre de commande et l'opérateur peut réactiver la commande de déplacement au sol grâce à un interrupteur de validation sur le poste de commande. Des explications correspondantes sont marquées sur le pupitre de commande.

Un inconvénient de cette solution réside là-encore dans le fait que l'inhibition automatique de la commande de déplacement au sol et la nécessité d'actionner un interrupteur de validation pour la réactiver sont des sources de complication pour l'opérateur et qui peuvent aussi le dérouter s'il n'en a pas l'habitude, ce d'autant plus si les explications sur le pupitre ne sont plus lisibles ou dans une langue inconnue de l'opérateur.

Le risque de désorientation de l'opérateur et de confusion des directions de déplacement avant et arrière existe aussi dans le cas des nacelles élévatrices dites « à mâts verticaux ». En effet, la structure élévatrice de la plate-forme de travail comprend généralement une tourelle pivotante montée sur le châssis et un mât télescopique montée verticalement sur la tourelle. La plate-forme de travail est supportée généralement par l'extrémité supérieure du mât vertical par le biais d'un bras plus court de type pendulaire.

Le risque de désorientation de l'opérateur et de confusion des directions de déplacement avant et arrière existe parfois aussi dans le cas de nacelles élévatrices pour lesquelles la plate-forme de travail a toujours une même orientation par rapport au châssis. C'est le cas des nacelles élévatrices dites «à ciseaux» pour lesquelles la structure élévatrice est constituée par un mécanisme en ciseaux. Celui-ci permet uniquement un déplacement vertical de la plate-forme de travail. Le pupitre de commande est parfois prévu pour être déplaçable par l'opérateur de manière à pouvoir l'accrocher de façon amovible en différents endroits du garde-corps, par exemple du côté avant ou du côté arrière de la plate-forme de travail, ce qui a pour effet d'inverser la direction de sollicitation de la poignée de commande par rapport à la direction de déplacement du châssis au sol. Cette difficulté existe plus généralement lorsque le pupitre de commande est amovible de la sorte, quel que soit la technologie du système de levage de la plate-forme de travail. Parfois, le pupitre de commande est même prévu pour que l'opérateur puisse le tenir d'une seule main et manipuler ses organes de commande de l'autre, ce qui permet notamment de commander la nacelle-élévatrice depuis le sol au lieu de la plate-forme. Dans ce cas encore, le risque de confusion des directions de déplacement avant et arrière existe.

Par ailleurs, US 7,194,358 B2 divulgue le préambule des revendications indépendantes. Plus particulièrement, ce document décrit une nacelle élévatrice à ciseaux comprenant un système anticollision lequel inclut un dispositif indicateur monté sur la nacelle élévatrice dans un endroit quelconque aisément visible par un opérateur. Le dispositif indicateur comprend un indicateur de direction de braquage qui montre l'angle des roues directrices de la nacelle élévatrice. L'indicateur de direction de braquage comprend en outre une tête de flèche pointant dans la direction dans laquelle la nacelle élévatrice se déplacerait si l'organe de commande manuel pour enclencher la marche avant était activé. Autrement dit, la tête de flèche pointe en permanence dans la direction de déplacement avant de la nacelle élévatrice, peu importe qu'un déplacement de la nacelle élévatrice soit sélectionnée ou non à l'organe de commande et peu importe laquelle direction de déplacement avant ou arrière est effectivement sélectionnée.

Par conséquent, cet indicateur n'apporte qu'une assistance limitée à l'opérateur pour actionner comme il convient l'organe de commande manuel afin de déplacer le châssis au sol dans la direction avant ou arrière effectivement souhaitée. En particulier, cette solution impose aussi à l'opérateur un effort intellectuel pour choisir dans quel sens actionner l'organe de commande manuel selon qu'il souhaite enclencher la direction de déplacement avant ou arrière par comparaison à la direction avant pointée par l'indicateur en forme de flèche. De plus, un tel indicateur risque de désorienter l'opérateur et le confondre puisqu'il indique la direction opposée à la direction de déplacement dans le cas où l'opérateur enclenche la marche arrière. De ce fait, les erreurs restent possibles, notamment en cas d'inattention ou de fatigue de l'opérateur. Les inconvénients sont encore pires si cette solution était appliquée à une nacelle élévatrice à tourelle et/ou ayant un poste de commande amovible et déplaçable sur la plate-forme de travail pour les raisons déjà mentionnée à propos des autres solutions existantes correspondantes.

Un but de la présente invention est d'améliorer l'art antérieur. Elle vise notamment à fournir une solution limitant au maximum le risque pour l'opérateur au pupitre de commande de se tromper sur la direction de déplacement avant ou arrière du châssis au sol, tout en assurant une simplicité d'utilisation des commandes de déplacement du châssis au sol, même lorsqu'il n'a pas l'habitude de manœuvrer des nacelles élévatrices mettant en œuvre cette solution.

A cette fin, la présente invention propose, selon un premier aspect, une nacelle élévatrice automotrice, comprenant :
- un châssis présentant un axe longitudinal suivant lequel le châssis est apte à se déplacer au sol dans une direction avant et dans une direction arrière opposée à la direction avant ;
- une plate-forme de travail,
- une structure élévatrice montée sur le châssis et supportant la plate-forme de travail,
- un pupitre de commande permettant de :
   ∘ commander la structure élévatrice pour déplacer la plate-forme jusqu'à une position de travail en hauteur, et
   ∘ déplacer sélectivement le châssis au sol dans la direction avant et dans la direction arrière,
   caractérisée en ce que la nacelle élévatrice comprend en outre un système de signalisation visuelle pour indiquer la direction de déplacement du châssis au sol sélectionnée au pupitre de commande par activation d'au moins une indication visuelle :
   ∘ localisée du côté du châssis qui correspond à la direction de déplacement sélectionnée, ou
   ∘ ayant une forme orientée pointant dans la direction de déplacement sélectionnée.

Autrement dit, lors de la sélection d'une des directions avant ou arrière au pupitre de commande, le système de signalisation fait passer l'au moins une indication visuelle telle que définie de l'état inactif à l'état actif. L'opérateur est ainsi informé par le système de signalisation visuelle de la direction de déplacement sélectionnée sans avoir à fournir un effort quelconque de comparaison, et ce quel que soit l'orientation du châssis par rapport au pupitre de commande. Cette solution ne requiert pas d'exigence particulière quant au fonctionnement du ou des organes de commande du déplacement du châssis au sol dont est pourvu le pupitre de commande. Il peut classiquement s'agir d'une poignée de commande articulée à la façon d'une colonne de commande aéronautique pour laquelle une même direction d'actionnement provoque toujours le déplacement du châssis au sol dans une même direction.

L'indication visuelle est préférentiellement fournie à des endroits de la nacelle élévatrice où elle est facilement visible, en particulier depuis la plate-forme de travail où se tient le plus souvent l'opérateur, et plus particulièrement depuis le pupitre de commande s'il est fixé à un endroit prédéterminé - ou à un endroit de fixation préférentiel s'il est amovible - de la plate-forme de travail. Le fait pour l'indicateur visuel d'avoir une forme orientée pointant dans la direction de déplacement sélectionnée est particulièrement avantageux puisque cela confère une grande flexibilité dans le choix de la localisation de l'indication visuelle sur la nacelle élévatrice.

Il peut être prévu que le système de signalisation active simultanément plusieurs indications visuelles situées en différents endroits de la nacelle élévatrice qui indiquent toutes la direction de déplacement sélectionnée. De cette manière, la probabilité que l'opérateur puisse voir au moins l'une d'entre elle peut être maximisée, quel que soit l'endroit où il se tient notamment dans le cas où le pupitre de commande est amovible.

Bien entendu, il est préférable que le système de signalisation soit prévu pour faire repasser l'au moins une indication visuelle de l'état actif à l'état inactif lorsque la direction de déplacement correspondante cesse d'être sélectionnée au pupitre de commande.

Suivant un premier mode de réalisation préféré de ce premier aspect de l'invention, le système de signalisation visuelle comprend au moins un indicateur visuel solidarisé au châssis que le système de signalisation visuelle active pour procurer l'indication visuelle d'au moins l'une des directions avant et arrière.

Ce premier mode de réalisation préféré peut être complété avantageusement par une ou plusieurs des caractéristiques suivantes :
- le système de signalisation visuelle comprend :
   - un premier et un deuxième indicateurs visuels solidarisés au châssis et localisés du côté avant du châssis, et
   - un troisième et un quatrième indicateurs visuels solidarisés au châssis et localisés du côté arrière du châssis,
   dans laquelle :
   - le système de signalisation visuelle active le premier et le troisième indicateurs visuels pour procurer chacun l'indication visuelle de la direction avant sous la forme d'une forme orientée pointant dans la direction avant, et
   - le système de signalisation visuelle active le deuxième et le quatrième indicateurs visuels pour procurer chacun l'indication visuelle de la direction arrière sous la forme d'une forme orientée pointant dans la direction arrière ;
- le premier et le quatrième indicateurs visuels sont en outre localisés vers un même côté latéral du châssis, et le deuxième et le troisième indicateurs visuels sont en outre localisés vers l'autre côté latéral du châssis ;
- le châssis est monté sur deux roues avant et deux roues arrière par l'intermédiaire desquelles le châssis se déplace au sol, et chacun desdits indicateurs visuels est agencé au-dessus de l'une respective des roues ;
- la structure élévatrice comprend une tourelle montée pivotante autour d'un axe vertical sur le châssis, et un mécanisme de levage de la plate-forme de travail lequel est monté sur la tourelle, la plate-forme de travail étant déportée d'un côté par rapport à la tourelle, lesdits indicateurs visuels étant localisés de manière qu'au moins deux d'entre eux se succédant sur le pourtour du châssis du côté correspondant à la plate-forme soient libres de superposition par la tourelle, quel que soit l'orientation de la tourelle par rapport au châssis.

Suivant un deuxième mode de réalisation préféré, la structure élévatrice comprend une tourelle montée pivotante autour d'un axe vertical sur le châssis, et un mécanisme de levage de la plate-forme de travail lequel est monté sur la tourelle, le système de signalisation visuelle comprenant :
- au moins un capteur pour déterminer l'orientation de la tourelle par rapport au châssis, et
- au moins un indicateur visuel agencé sur la tourelle que le système de signalisation visuelle active pour procurer l'indication visuelle d'au moins l'une des directions avant et arrière.

Dans ce deuxième mode de réalisation, il est avantageux que le système de signalisation visuelle comprenne une pluralité d'indicateurs visuels agencés sur la tourelle et répartis angulairement autour de l'axe vertical de la tourelle, le système de signalisation procurant l'indication visuelle d'au moins l'une des directions avant et arrière en activant au moins un des indicateurs visuels localisé du côté longitudinal correspondant du châssis.

Suivant un troisième mode de réalisation préféré, l'orientation de la plate-forme de travail est fixe par rapport au châssis, la structure élévatrice étant préférentiellement un mécanisme en ciseaux, et le système de signalisation visuelle comprend au moins un indicateur visuel solidarisé à la plate-forme de travail que le système de signalisation visuelle active pour procurer l'indication visuelle d'au moins l'une des directions avant et arrière.

Dans ce troisième mode de réalisation, il est avantageux que le système de signalisation visuelle comprenne au moins deux indicateurs lumineux solidarisés à la plate-forme de travail, l'un pointant dans la direction avant et l'autre pointant dans la direction arrière, et que le système de signalisation visuelle soit prévu pour activer celui des indicateurs qui pointe dans la direction de déplacement sélectionnée au pupitre de commande parmi les directions avant et arrière tandis que l'autre est maintenu inactif.

Plus avantageusement encore, il peut être prévu que le système de signalisation visuelle comprenne quatre indicateurs lumineux solidarisés à la plate-forme de travail, deux d'entre eux étant agencés vers l'avant de la plate-forme et pointant chacun dans une autre des directions avant et arrière et les deux autres étant agencés vers l'arrière de la plate-forme et pointant chacun dans une autre des directions avant et arrière, et que le système de signalisation visuelle est prévu pour activer ceux des quatre indicateurs qui pointent dans la direction de déplacement sélectionnée au pupitre de commande parmi les directions avant et arrière tandis que les autres sont maintenus inactifs.

Par ailleurs, ledit au moins un indicateur visuel est préférence agencé sur ou intégré dans des plinthes encadrant le bas d'un garde-corps de la plate-forme de travail. Il est avantageux que ledit au moins un indicateur visuel soit agencé traversant dans les plinthes ou dédoublé à l'intérieur et à l'extérieur de la plinthe correspondante pour être visible à la fois depuis l'intérieur et l'extérieur de la plate-forme de travail.

Dans le but mentionné plus haut, la présente invention propose aussi selon un deuxième aspect une nacelle élévatrice automotrice, comprenant :
- un châssis présentant un axe longitudinal suivant lequel le châssis est apte à se déplacer au sol dans une direction avant et dans une direction arrière opposée à la direction avant ;
- une plate-forme de travail,
- une structure élévatrice montée sur le châssis et supportant la plate-forme de travail,
- un pupitre de commande permettant de :
   ∘ commander la structure élévatrice pour déplacer la plate-forme jusqu'à une position de travail en hauteur, et
   ∘ déplacer sélectivement le châssis au sol dans la direction avant et dans la direction arrière,
caractérisée en ce que la nacelle élévatrice comprend en outre un système de signalisation visuelle pour indiquer la direction de déplacement du châssis au sol sélectionnée au pupitre de commande par activation sur un dispositif de visualisation, de préférence un écran d'affichage, d'au moins une indication visuelle
∘ localisée du côté correspondant à la direction de déplacement sélectionnée sur une visualisation de la direction azimutale du châssis par rapport au dispositif de visualisation, ou
∘ ayant une forme orientée selon la direction azimutale du châssis par rapport au dispositif de visualisation et pointant dans la direction correspondant à la direction de déplacement sélectionnée,
le système de signalisation visuelle comprenant au moins un capteur pour déterminer l'azimut du châssis par rapport au dispositif de visualisation.

L'invention suivant ce deuxième aspect présente les mêmes avantages que pour le premier aspect décrit plus haut. En effet, lors de la sélection d'une des directions avant ou arrière au pupitre de commande, le système de signalisation fait passer l'au moins une indication visuelle telle que définie de l'état inactif à l'état actif sur le dispositif de visualisation. L'opérateur est donc également informé de la direction de déplacement sélectionnée sans effort particulier de sa part, étant donné que le dispositif de visualisation rend compte de la direction de déplacement sélectionnée sur la base d'une visualisation de la direction azimutale du châssis par rapport au dispositif de visualisation. L'orientation de la direction azimutale du châssis ainsi visualisée concorde avec l'orientation de l'axe longitudinal du châssis. De ce fait, l'opérateur a une compréhension immédiate de la direction de déplacement sélectionnée grâce au dispositif de visualisation. Là-aussi, il est préférable que le système de signalisation soit prévu pour faire repasser l'au moins une indication visuelle sur le dispositif de visualisation de l'état actif à l'état inactif lorsque la direction de déplacement correspondante cesse d'être sélectionnée au pupitre de commande.

Suivant un mode de réalisation préféré de l'invention selon ce deuxième aspect, le système de signalisation visuelle est configuré pour afficher sur le dispositif de visualisation une représentation graphique du châssis orientée selon la direction azimutale du châssis par rapport au dispositif de visualisation. Par ailleurs, il est avantageux que le dispositif de visualisation soit fixé au pupitre de commande.

Que ce soit dans le cas de l'invention selon le premier aspect décrit plus haut ou selon le deuxième aspect qui vient d'être décrit, le pupitre de commande peut être monté fixement sur la plate-forme de travail ou avec une orientation fixe par rapport à celle-ci. Dans ce cas, s'agissant de l'invention selon le deuxième aspect, il est avantageux que le système de signalisation visuelle soit en outre configuré pour afficher sur le dispositif de visualisation une représentation graphique de la plate-forme de travail et/ou du pupitre de commande orientés selon leur direction azimutale par rapport au dispositif de visualisation.

Alternativement, le pupitre de commande peut être prévu pour être librement déplaçable par l'opérateur en cours d'utilisation de la nacelle élévatrice. Dans ce cas, le pupitre de commande est de préférence prévu pour être accroché de manière amovible en différents endroits d'un garde-corps de la plate-forme de travail. Il peut notamment s'agir d'une nacelle élévatrice à ciseaux ou d'une nacelle élévatrice à mât vertical.

Enfin, il peut être prévu que le pupitre de commande comprenne au moins un organe de commande de déplacement au sol actionnable par l'opérateur pour déplacer sélectivement le châssis au sol dans la direction avant et dans la direction arrière, et que la plate-forme de travail ou le pupitre de commande comprenne un organe de validation actionnable par l'opérateur et que la nacelle élévatrice inhibe le déplacement du châssis au sol en fonction de l'actionnement ou l'absence d'actionnement de l'organe de validation, le système de signalisation visuelle indiquant la direction de déplacement sélectionnée à l'au moins un organe de commande par activation de l'au moins une indication visuelle malgré l'inhibition du déplacement du châssis au sol. Cela permet à l'opérateur de vérifier la direction de déplacement sélectionnée avant de faire déplacement le châssis au sol.

L'on comprendra que l'invention est particulièrement avantageuse notamment pour les cas où la structure élévatrice comprend une tourelle montée pivotante autour d'un axe vertical sur le châssis, et un mécanisme de levage de la plate-forme de travail lequel est monté sur la tourelle. Mais plus généralement encore, elle est particulièrement avantageuse pour toute nacelle élévatrice pour laquelle l'azimut du châssis par rapport au pupitre de commande est susceptible de varier en cours d'utilisation de la nacelle élévatrice.

D'autres caractéristiques et avantages de l'invention apparaîtront à la lecture de la description qui suit d'un mode de réalisation préféré de l'invention, donnée à titre d'exemple et en référence au dessin annexé.
Les figures 1 et 2 représentent respectivement une vue en perspective et une vue de dessus d'une nacelle élévatrice à bras équipée d'un système de signalisation visuelle selon l'invention, la structure élévatrice et la plate-forme de travail de la nacelle élévatrice étant dans une première configuration pour laquelle l'orientation du châssis et l'orientation du pupitre de commande de la plate-forme se correspondent.
La figure 3 représente par des flèches les orientations relatives du châssis, de la tourelle et du pupitre de commande de la nacelle élévatrice dans sa configuration des figures 1 et 2.
Les figures 4 et 5 représentent respectivement une vue en perspective et une vue de dessus de la plate-forme de travail de la nacelle élévatrice des figures 1 et 2.
Les figures 6A, 6B, 6C illustrent trois variantes de l'affichage à l'écran du pupitre de commande pour la nacelle élévatrice des figures 1 et 2 dans la configuration correspondante.
Les figures 7, 8, 9, 10A, 10B, 10C correspondent aux figures 1, 2, 6A, 6B, 6C respectivement, mais pour une configuration de la nacelle élévatrice dans laquelle le châssis est orienté à 45° par rapport au pupitre de commande de la plate-forme du fait d'un changement d'orientation de la tourelle par rapport au châssis.
Les figures 11, 12, 13, 14A, 14B, 14C correspondent aux figures 1, 2, 3, 6A, 6B, 6C respectivement, mais pour une configuration de la nacelle élévatrice dans laquelle le châssis est orienté à 90° par rapport au pupitre de commande de la plate-forme.
Les figures 15, 16, 17, 18A, 18B, 18C correspondent aux figures 1, 2, 3, 6A, 6B, 6C respectivement, mais pour une configuration de la nacelle élévatrice dans laquelle le châssis est orienté à 180° par rapport au pupitre de commande de la plate-forme.
Les figures 19, 20, 21A, 21B, 21C correspondant aux figures 2, 3, 6A, 6B, 6C respectivement, mais pour une configuration de la nacelle élévatrice dans laquelle le châssis est orienté à 45° par rapport au pupitre de commande de la plate-forme du fait d'un changement d'orientation de la plate-forme de travail par rapport à la structure élévatrice.
La figure 22 est une vue de détail de l'afficheur lumineux agencé sur la tourelle de la nacelle élévatrice qui sert à afficher une flèche indicative de la direction de déplacement du châssis au sol.
La figure 23 illustre un dispositif de visualisation simplifié de la direction de déplacement du châssis au sol pouvant être agencé sur le pupitre de commande.
La figure 24 est une vue en perspective d'une nacelle élévatrice à ciseaux équipée d'un système de signalisation visuelle selon l'invention.
La figure 25 est une vue de dessus de la plate-forme de travail de la nacelle élévatrice de la figure 24 qui illustre plusieurs positions possibles du pupitre de commande sur la plate-forme de travail.
La figure 26 est une vue en perspective de la plate-forme de travail de la nacelle élévatrice de la figure 24, mais observée depuis un point de vue de l'autre côté de la nacelle élévatrice.

Dans le mode de réalisation représenté, la nacelle élévatrice 1 comprend un châssis 2 présentant un axe longitudinal L par rapport auquel sont définies conventionnellement un côté avant 2_{AV} et un côté arrière 2_{AR} du châssis 2. Il est monté sur deux roues avant 3a, 3b et deux roues arrière 4a, 4b pour permettre le déplacement du châssis 2 au sol. Par conséquent, le déplacement du châssis 2 au sol se fait donc suivant l'axe longitudinal L du châssis 2. En variante, le châssis 2 peut être équipé d'organes de roulement au sol autres que des roues, par exemple des chenilles.

S'agissant d'une nacelle élévatrice automotrice, le châssis 2 est motorisé pour entrainer en rotation au moins deux des roues afin de déplacer longitudinalement le châssis 2 au sol au choix dans la direction avant F_{AV} ou dans la direction arrière F_{AR} opposée à la direction avant F_{AV}, étant précisé que ces deux directions sont définies en concordance avec les côtés avant 2_{AV} et arrière 2_{AR} du châssis 2. Les roues avant 3a, 3b et/ou les roues arrière 4a, 4b sont de préférence directrices.

La nacelle élévatrice 1 comprend une structure élévatrice 6 supportant une plate-forme de travail 20 prévue pour recevoir une ou plusieurs personnes et du matériel.

La structure élévatrice 6 comprend une tourelle 8 montée de manière pivotante autour d'un axe vertical Z sur le châssis 2. La tourelle 8 est de préférence agencée sur le châssis 2 de manière à pouvoir tourner autour de l'axe vertical Z sans limitation d'angle. En variante, l'étendue maximale de rotation de la tourelle 8 sur le châssis 2 est limitée et est inférieure ou égale à 360°, mais est de préférence supérieure à 300°.

La nacelle élévatrice 1 est en l'occurrence une nacelle télescopique. De ce fait, la structure élévatrice comprend un bras télescopique 10 monté sur la tourelle 8. Le bras 10 est articulé sur la tourelle 8 pour pouvoir l'abaisser et le lever par rapport à celle-ci. Des vérins hydrauliques permettent d'actionner le bras 10 pour l'abaisser et le lever par rapport à la tourelle 8, ainsi que pour l'étendre ou le rétracter.

A l'extrémité supérieure 13 du bras 10 est monté un bras plus court 12, appelé communément pendulaire. La plate-forme 20 est montée à l'autre extrémité 14 du bras 12. En l'occurrence, la plate-forme 20 est articulée au bras 12 avec possibilité de pivotement autour d'un axe horizontal et autour d'un axe vertical. Le bras 12 est articulé au bras 10 avec possibilité de pivotement uniquement autour d'un axe horizontal. Le débattement angulaire de la plate-forme 20 autour de l'axe vertical est préférentiellement inférieur à +/- 90° par rapport au bras 12. En variante, le bras 12 présente en outre une possibilité de pivotement autour d'un axe vertical par rapport au bras 10, auquel cas le débattement angulaire du bras 12 autour de l'axe vertical est préférentiellement inférieur à +/- 180° par rapport au bras 10. Des vérins permettent de faire pivoter le bras 12 par rapport au bras 10 et la plate-forme 20 par rapport au bras 12. Le bras 12 permet ainsi de déplacer localement la plate-forme 20 - c'est-à-dire par rapport au bras 10 - en hauteur, ainsi que son orientation, voire aussi latéralement le cas échéant.

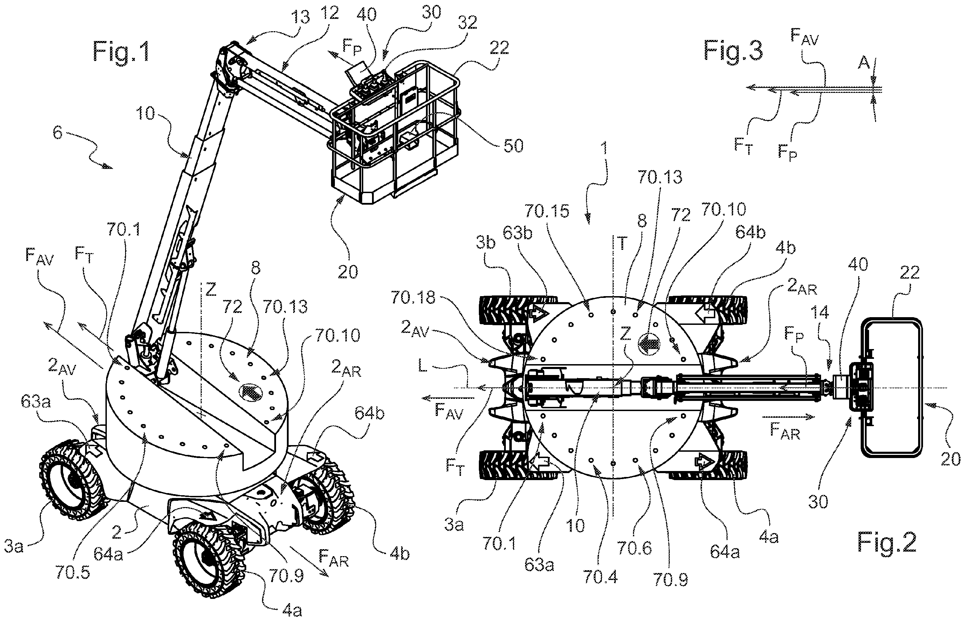

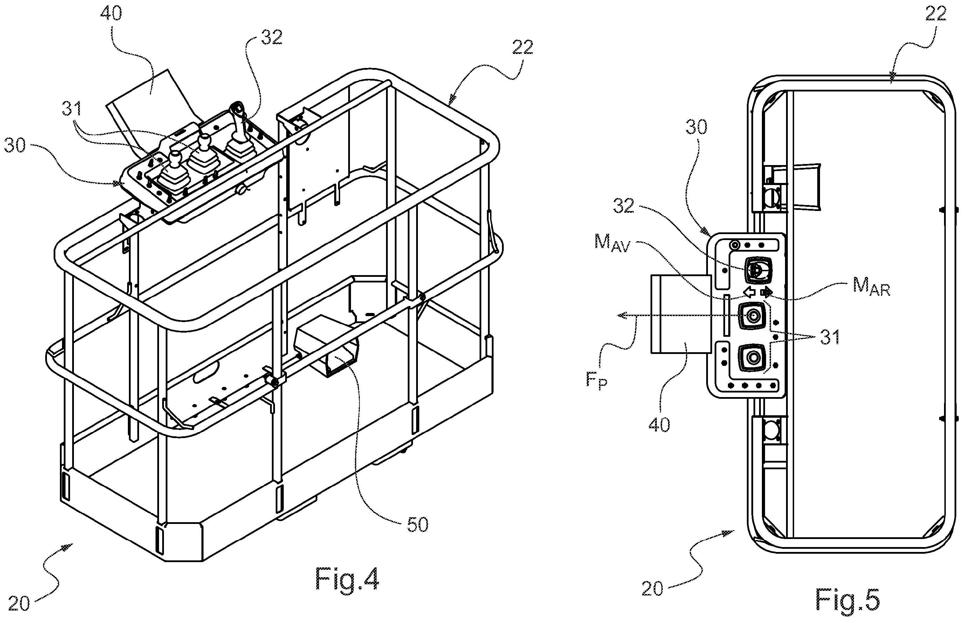

Comme cela est le mieux visible sur les figures 3 et 4, la plate-forme 20 présente un garde-corps 22 et un pupitre de commande 30. En l'occurrence, le pupitre de commande 30 est monté fixement sur un pan du garde-corps 22 ou du moins avec une orientation fixe par rapport à la plate-forme 20, ce qui signifie que l'azimut de la plate-forme de travail 20 par rapport au pupitre de commande 30 est fixe. En l'occurrence, il s'agit du pan du garde-corps 22 du côté où la plate-forme 20 est montée sur le bras 12.

Le pupitre 30 comprend différents organes de commande 31 permettant à un opérateur à bord de la plate-forme 20 de commander la structure élévatrice 6 pour déplacer la plate-forme 20 jusqu'à une position de travail en hauteur et la faire revenir ensuite dans une position abaissée et rétractée sur le châssis 2. Dans notre exemple, le pupitre 30 permet de provoquer des mouvements suivant les différentes possibilités décrites précédemment. Autrement dit, il permet à l'opérateur de faire pivoter la tourelle 8 sur le châssis 2, de faire pivoter le bras 10 sur la tourelle 8 et le faire se déployer ou se rétracter, ainsi que de faire déplacer localement la plate-forme 20 grâce au bras 12. Pour le confort et la sécurité de l'opérateur à bord de la plate-forme 20 lorsque la nacelle élévatrice 1 est en utilisation, celle-ci est équipée d'un dispositif hydraulique ou électronique qui maintient la plate-forme 20 sensiblement parallèle au sol lors pivotement du bras 10 sur la tourelle 8. Similairement, la plate-forme 20 reste parallèle au sol lors du pivotement du bras 12 par rapport au bras 10 autour de l'axe horizontal, par exemple grâce à une structure en parallélogramme déformable du bras 12.

Le pupitre 30 comprend aussi au moins un organe de commande à actionnement manuel permettant à l'opérateur de déplacer le châssis 2 au sol au choix dans la direction avant F_{AV} ou la direction arrière F_{AR}, ainsi que de faire pivoter les roues directrices du châssis 2. En l'occurrence, il s'agit d'une poignée de commande 32 articulée à la façon d'une colonne de commande aéronautique : le fait de l'incliner vers soi, respectivement à l'opposé de soi, enclenche le déplacement du châssis 2 dans sa direction arrière F_{AR}, respectivement dans sa direction avant F_{AV}.

Le pupitre 30 peut aussi comprendre un dispositif de visualisation de préférence sous la forme d'un écran 40, par exemple un écran à cristaux liquides, dont l'usage sera décrit plus loin.

Un organe de validation 50 - appelé communément « homme mort » - inhibe les organes de commande précités du pupitre 30 s'il n'est pas actionné simultanément par l'opérateur. Dans l'exemple représenté, il s'agit d'une pédale à actionnement par le pied agencé sur le sol de la plate-forme 20.

Les figures 1 et 2 illustrent la plate-forme 20 dans une position levée. Dans la position représentée, la tourelle 8 et la plate-forme 20 sont chacune dans une orientation initiale par rapport au châssis 2, c'est-à-dire leur orientation préférentielle en position de repos de la structure élévatrice 6 lorsque la nacelle élévatrice 1 n'est pas en service, le bras 10 étant abaissé et rétracté sur la tourelle 8.

Dans cette orientation initiale de la tourelle 8, l'axe longitudinal du bras 10 est compris dans le plan longitudinal médian du châssis 2 (ce dernier se confond avec l'axe longitudinal L dans la figure 2).

Comme cela est visible, dans cette orientation initiale, le bras 10 s'étend vers l'arrière 2AR du châssis 2 de sorte que la plate-forme 20 est située à l'arrière du châssis 2.

Dans la suite, l'orientation de la tourelle 8 sera définie par une flèche horizontale F_{T} liée à la tourelle 8 laquelle est dirigée dans la direction avant F_{AV} du châssis dans cette orientation initiale de la tourelle 8, tandis que l'orientation du châssis 2 sera définie en référence à sa direction avant de déplacement F_{AV}.

Dans son orientation initiale, la plate-forme 20 est positionnée perpendiculairement au plan vertical contenant les axes longitudinaux des bras 10 et 12. De ce fait, un opérateur à bord de la plate-forme 20 se tenant devant le pupitre 30 et regardant droit devant lui, regarde dans la direction F_{T} de la tourelle 8, et donc aussi dans la direction F_{AV} dans la configuration des figures 1 et 2 du fait que la tourelle 8 est aussi dans son orientation initiale.

Il résulte que dans la configuration des figures 1 et 2, la direction de sollicitation de la poignée de commande 32 - c'est-à-dire soit vers l'opérateur, soit à l'opposé - pour déplacer la nacelle élévatrice 1 au sol, concorde avec la direction de déplacement correspondante du châssis 2 - c'est-à-dire respectivement en direction arrière F_{AR} et en direction avant F_{AV}.

Dans la suite, l'orientation du pupitre 30 sera définie par une flèche horizontale F_{P} liée au pupitre 30 laquelle est dirigée - lorsque la plate-forme 20 est dans son orientation initiale - dans la même direction que la flèche F_{T} d'orientation de la tourelle 8.

La figure 3 représente les flèches d'orientation F_{AV}, F_{T} et Fp correspondant respectivement au châssis 2, à la tourelle 8 et au pupitre 30 pour la nacelle élévatrice 1 dans la configuration des figures 1 et 2. Il y est aussi indiqué l'angle orienté - référencé A - entre les flèches Fp et F_{AV}, la flèche Fp servant de référence. Cet angle A correspond à l'azimut du châssis 2 par rapport au pupitre 30. Il est de 0° dans la configuration des figures 1 et 2.

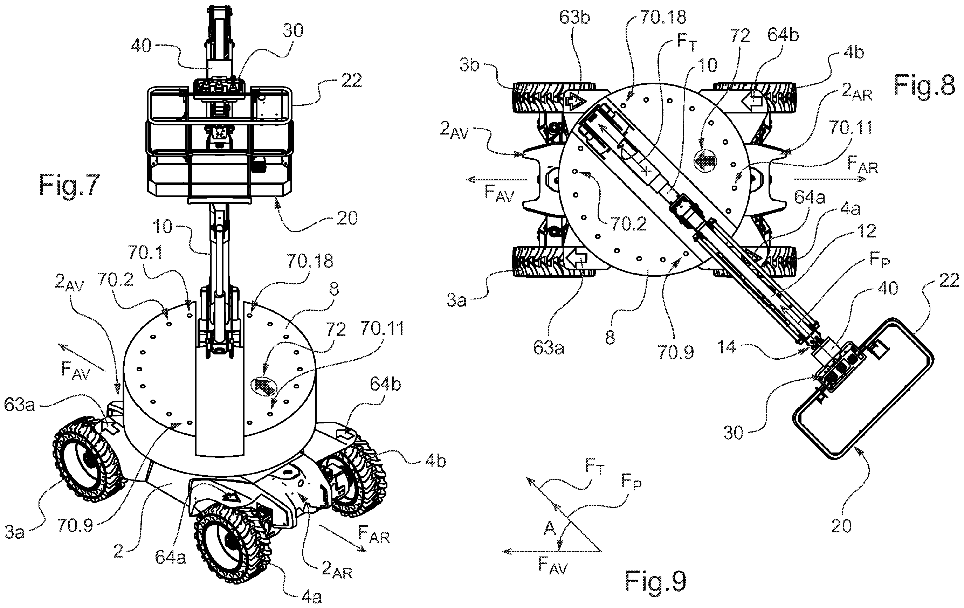

Compte tenu des différentes possibilités de pivotement autour d'axes verticaux de la plate-forme 20 par rapport au châssis 2 - à savoir dans notre exemple la rotation de la tourelle 8 sur le châssis 2 et le pivotement de la plate-forme 20 par rapport au bras 12 -, l'orientation de la plate-forme 20 - et donc du pupitre 30 - par rapport au châssis 2 peut varier. Autrement dit, l'azimut A du châssis par rapport au pupitre 30 peut varier. Cette possibilité est illustrée dans les figures 7, 8, 11, 12, 15 et 16 pour différentes orientations de la tourelle 8 par rapport au châssis 2, l'orientation de la plate-forme 20 par rapport à la tourelle 8 étant inchangée.

Plus particulièrement, dans la configuration des figures 7 et 8, la tourelle 8 a pivoté de 45° par rapport au châssis 2 et l'azimut A est alors de 45° : cf. figure 9.

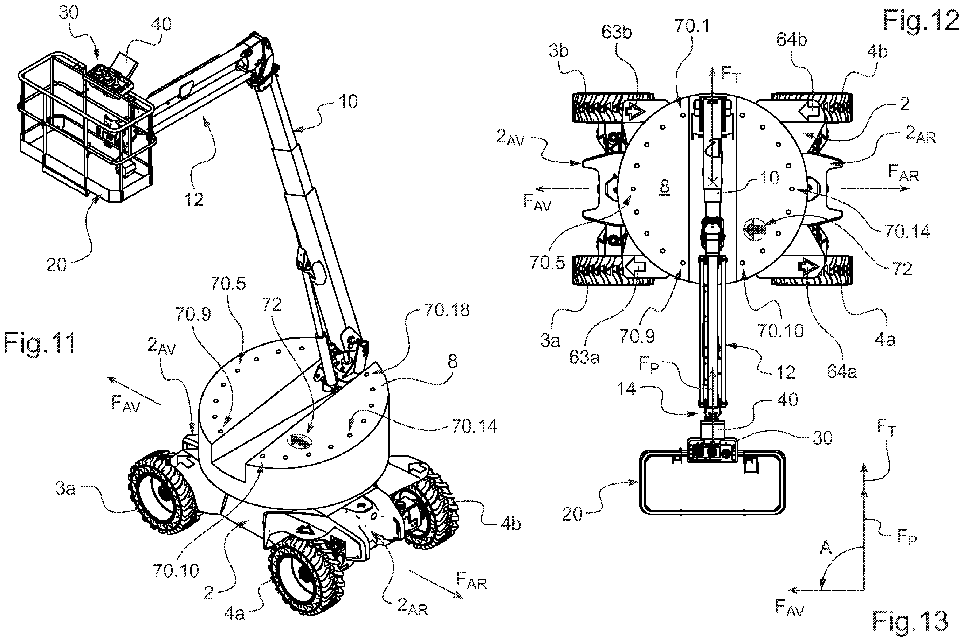

Dans la configuration des figures 11 et 12, la tourelle 8 a pivoté de 90° par rapport au châssis 2 et l'azimut A est alors de 90° : cf. figure 13. Dans ce cas, les directions de sollicitation de la poignée de commande 32 pour déplacer la nacelle élévatrice 1 au sol sont perpendiculaires par rapport aux directions de déplacement F_{AV} et F_{AR}, ce qui peut être déroutant et source d'erreur pour l'opérateur.

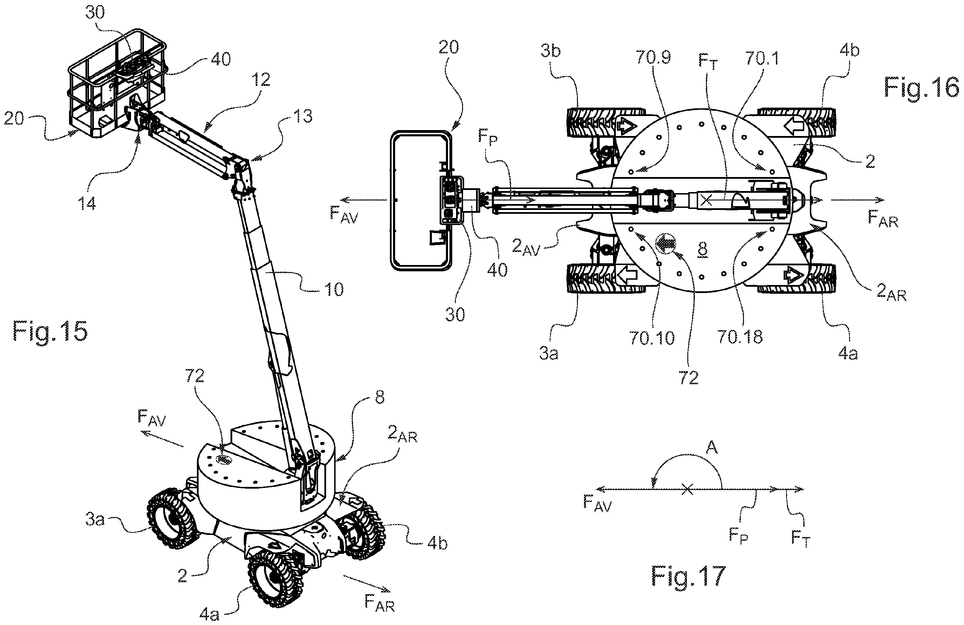

Dans la configuration des figures 15 et 16, la tourelle 8 a pivoté de 180° par rapport au châssis 2 et l'azimut A est alors de 180° : cf. figure 17. Les directions de sollicitation de la poignée de commande 32 pour déplacer la nacelle élévatrice 1 au sol sont alors inversées par rapport aux directions de déplacement F_{AV} et F_{AR}, ce qui peut créer un risque de confusion et d'erreur pour l'opérateur.

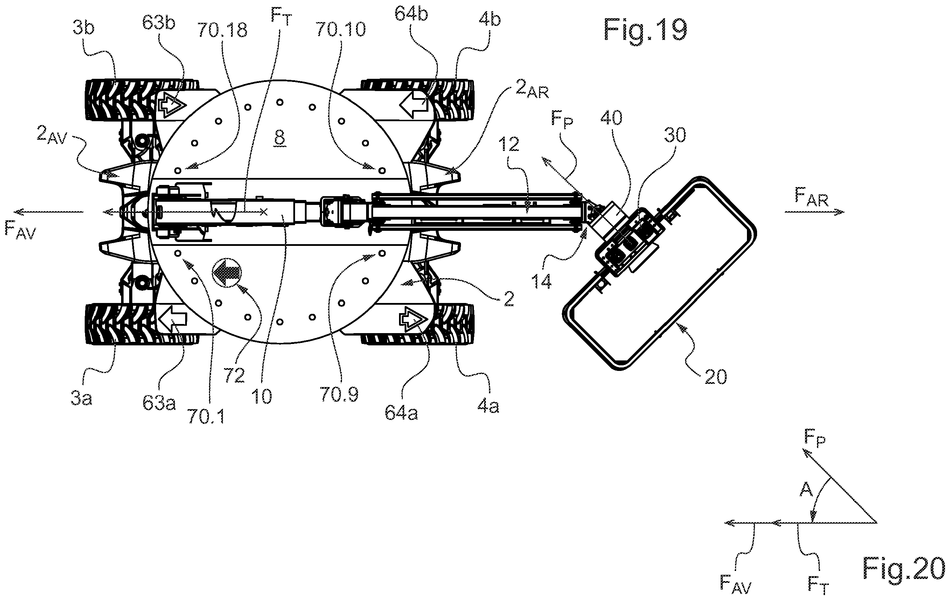

Dans la configuration de la figure 19, la tourelle 8 est dans son orientation initiale - les flèches F_{T} et F_{AV} ont de ce fait la même direction -, mais la plate-forme 20 a pivoté de 45° par rapport aux bras 10 et 12. De ce fait, l'azimut A - représenté à la figure 20 - est de 45° comme dans la configuration des figures 7 et 8.

Plus généralement, l'on comprendra que l'orientation de la tourelle 8 par rapport au châssis 2 et celle de la plate-forme 20 par rapport au bras 12 - voire le cas échéant celle du bras 12 par rapport au bras 10 si l'extrémité 13 présente une liaison pivot vertical - peuvent être modifiées de façon indépendante les unes des autres grâce au pupitre de commande 30.

Pour assister l'opérateur au poste de commande 30 lors des commandes de déplacement du châssis 2 au sol et limiter le risque de confusion concernant sa direction de déplacement, la nacelle élévatrice 1 est pourvu d'un système de signalisation visuelle.

Suivant un premier aspect, ce système de signalisation visuelle comprend un marquage au niveau de la poignée de commande 32 et une signalisation visuelle au niveau du châssis 2 rappelant le marquage au niveau de la poignée de commande 32 afin que l'opérateur puisse déterminer la direction de déplacement du châssis 2 au sol par comparaison des deux.

Plus particulièrement, un marquage sous forme de deux flèches - référencées M_{AR} et M_{AV} - de forme et de couleur différentes est apposé sur le pupitre de commande 30 à côté de la poignée de commande 32. La flèche M_{AR} pointe vers l'opérateur debout devant le pupitre 30 et correspond donc à la direction de sollicitation de la poignée de commande 32 pour enclencher le déplacement du châssis 2 dans la direction arrière F_{AR}. La flèche M_{AV} pointe en direction opposée et correspond à la direction de sollicitation de la poignée de commande 32 pour enclencher le déplacement du châssis dans la direction avant F_{AV}.

Par ailleurs, des flèches similaires à celles M_{AV}, M_{AR} sont agencées sur le châssis 2 - ou sur des pièces solidaires de celui-ci - et pointent respectivement dans les directions de déplacement avant F_{AV} et arrière F_{AR}. La similitude entre les flèches M_{AV}, respectivement M_{AR}, avec celles agencées sur le châssis 2 permet à l'opérateur au pupitre 30 de vérifier - par rapprochement visuel - dans quelle direction solliciter la poignée de commande 32 pour déplacer le châssis 2 au sol dans la direction souhaitée. A cette fin, il est préférable de disposer les flèches de manière qu'au moins une pointant dans la direction F_{AV} et au moins une autre pointant dans la direction F_{AR} soient visibles depuis la plate-forme 30, quel que soit la position relative de la plate-forme 20 par rapport au châssis 2.

Dans cet exemple, il s'agit, d'une part, de deux flèches 63a et 64b pointant dans la direction de déplacement avant F_{AV} et qui ont une forme et une couleur correspondantes à la flèche M_{AV} et, d'autre part, de deux flèches 63b et 64a pointant dans la direction de déplacement arrière F_{AR} et qui ont une forme et une couleur correspondantes à la flèche M_{AR}. Chacune de ces flèches est agencée sur un garde-boue au-dessus d'une roue respective du châssis 2. Cette localisation est avantageuse car elle n'est pas recouverte par la tourelle 8, quel que soit son orientation et elle est facilement visible depuis la plate-forme 20 au moins pour celles du côté de la plate-forme 20.

Plus généralement, si la tourelle 8 est excentrée par rapport au châssis 2 en raison de la taille de son contrepoids du côté opposé à la plate-forme 20 (c'est-à-dire le côté de la tourelle 8 vers lequel pointe la flèche d'orientation F_{T}), la partie excentrée de la tourelle 8 est susceptible de recouvrir deux de ces flèches et donc de les dissimuler. En revanche, les deux autres flèches ne sont pas recouvertes du fait que la tourelle 8 a une extension horizontale moindre du côté de la plate-forme 8 et restent donc visibles depuis la plate-forme 20. Ces deux flèches sont d'autant plus visibles que la tourelle 8 n'y fait pas obstacle puisqu'elles sont du côté de la tourelle 8 correspondant à la plate-forme 20.

Il est avantageux d'alterner la direction de déplacement pointée par les flèches correspondant à chaque fois à deux roues successives sur le pourtour du châssis 2 comme cela est illustré dans les figures : cf. les couples (63a, 63b), (63b, 64b), (64b, 64a) et (64a, 63a) constitués chacun d'une flèche dans la direction F_{AV} et d'une autre dans la direction F_{AR}. De la sorte, au moins deux flèches pointant chacune dans une autre direction de déplacement du châssis 2 au sol sont visibles simultanément depuis la plate-forme 20, quel que soit l'orientation de la tourelle 8.

Suivant un deuxième aspect du système de signalisation visuelle, les indicateurs visuels constitués par les flèches 63a, 63b, 64a, 64b sont activables pour attirer l'attention de l'opérateur. L'activation des indicateurs visuels consistent en un changement d'état visible de ceux-ci par rapport à leur état inactif. Ils sont préférentiellement réalisés sous forme d'indicateurs lumineux comprenant chacun une pièce en matière plastique translucide de couleur et de forme correspondante aux flèches M_{AV} et M_{AR} selon le cas. A titre d'exemple, l'état inactif d'un indicateur lumineux consiste dans le fait d'être éteint alors qu'à l'état activé, il est allumé. Il peut être allumé en continue ou plus préférentiellement être clignotant, ce qui permet d'attirer encore davantage l'attention. Alternativement, l'état inactif d'un indicateur lumineux consiste dans le fait d'être allumé en continu alors qu'à l'état activé, il clignote.

En l'absence de sollicitation de la poignée de commande 32, les indicateurs visuels sur le châssis 2 - en l'occurrence les flèches 63a, 63b, 64a, 64b - sont inactifs. Lorsque la poignée de commande 32 est actionnée dans le sens de la flèche M_{AV} pour enclencher un déplacement du châssis 2 au sol dans la direction avant F_{AV}, l'électronique de bord active les flèches 63a et 64b qui pointent dans la direction avant F_{AV} tandis que les flèches 63b et 64a pointant dans la direction arrière F_{AR} restent inactives. Inversement, si la poignée de commande 32 est actionnée dans la direction de la flèche M_{AR} pour enclencher un déplacement du châssis 2 au sol dans la direction arrière F_{AR}, l'électronique de bord active les flèches 63b et 64a qui pointent dans la direction arrière F_{AR} tandis que les flèches 63a et 64b restent inactives. Grâce à l'activation de ces indications visuelles, l'opérateur à bord de la plate-forme 20 est informé de la direction de déplacement du châssis 2 au sol par simple observation du châssis 2, sans effort intellectuel de comparaison des indications visuelles sur le châssis avec le marquage des flèches M_{AV} et M_{AR} à côté de la poignée de commande 32.

Bien qu'il soit avantageux que la signalisation visuelle soit mise en œuvre en combinant les premier et deuxième aspects qui viennent d'être décrit, l'on comprendra qu'ils peuvent être mis en œuvre indépendamment l'un de l'autre. Par exemple, il peut être prévu sur le châssis 2 un système de signalisation visuelle activant des indications visuelles conformément au deuxième aspect - en l'occurrence mises en œuvre par les indicateurs lumineux sous forme de flèches 63a, 63b, 64a, 64b - sans que celles-ci soient rappelée par un marquage similaire à côté de la poignée de commande 32, en l'occurrence les flèches M_{AV} et M_{AR} lesquelles peuvent par exemple être remplacées par les mots 'AVANT' et 'ARRIERE'. Dans ce cas, les indicateurs lumineux sous forme de flèches 63a, 63b, 64a, 64b peuvent être de forme et de couleur identique.

Suivant une variante, la signalisation visuelle activable ne consiste pas en des indicateurs visuels pointant dans une direction de déplacement du châssis 2 au sol, mais en des indicateurs visuels - pouvant avoir une forme quelconque, par exemple ronde - agencés du côté avant 2_{AV} et du côté arrière 2_{AR} du châssis, et permettant de ce fait d'identifier le côté correspondant du châssis 2 lorsqu'ils sont activés.

Lorsque la poignée de commande 32 est actionnée dans le sens de la flèche M_{AV} pour enclencher un déplacement du châssis 2 au sol dans la direction avant F_{AV}, l'électronique de bord active le ou les indicateurs visuels agencés sur le côté avant 2_{AV} du châssis 2 tandis que ceux sur le côté arrière 2_{AR} restent inactifs. Inversement, si la poignée de commande 32 est actionnée dans le sens de la flèche M_{AR} pour enclencher un déplacement du châssis 2 au sol dans la direction arrière F_{AR}, l'électronique de bord active le ou les indicateurs visuels agencés sur le côté arrière 2_{AR} du châssis 2 tandis que ceux à l'avant restent inactifs. De la sorte, les indicateurs visuels qui sont activés attirent l'attention de l'opérateur sur le côté du châssis 2 correspondant à la direction de déplacement sélectionnée.

Ces indicateurs visuels peuvent éventuellement avoir une forme et une couleur différentes selon qu'ils sont agencés du côté avant 2_{AV} ou du côté arrière 2_{AR} du châssis. Dans ce cas, un marquage rappelant les deux types d'indicateurs peut être apposé en correspondance à côté de la poignée de commande 32 conformément au premier aspect décrit plus haut.

Il est préférable de mettre en œuvre cette variante pour des nacelles élévatrices pour lesquels les indicateurs visuels peuvent être agencés de manière qu'au moins un indicateur visuel du côté arrière 2_{AR} et au moins un du côté avant 2_{AV} du châssis soient visibles depuis le pupitre de commande 20, quel que soit la position de la plate-forme 20 par rapport au châssis 2.

Suivant un troisième aspect, le système de signalisation visuelle comprend un ensemble d'indicateurs visuels activables disposés sur le dessus de la tourelle 8 et réparties sur son pourtour. En l'occurrence, il s'agit de 18 indicateurs lumineux réparties régulièrement sur le pourtour de la tourelle 8 de part et d'autre du bras 10. Ils sont référencés 70.i, avec 'i' prenant les valeurs entières de 1 à 18 dans l'ordre de leur succession sur le pourtour de la tourelle 8. L'on comprendra que le nombre total d'indicateurs 70.i peut être différent et ils peuvent être disposés sur une courbe fermée fictive autre qu'un cercle comme représenté.

En l'absence de sollicitation de la poignée de commande 32, l'ensemble des indicateurs visuels 70i sont inactifs. Lorsque la poignée de commande 32 est actionnée dans la direction de la flèche M_{AV} pour enclencher un déplacement du châssis 2 au sol dans la direction avant F_{AV}, l'électronique de bord active l'indicateur visuel 70.i de la tourelle 8 qui est le plus proche du plan médian longitudinal du châssis 2 du côté avant 2_{AV} du châssis 2 en laissant les autres inactifs. Il s'agit de l'indicateur 70.2 dans le cas des figures 7 et 8 et de l'indicateur 70.5 dans le cas des figures 11 et 12. Cependant, en raison de l'absence d'indicateur 70i à l'endroit du montage du bras 10 sur la tourelle 8, il est avantageux d'allumer simultanément les deux indicateurs 70.1 et 70.18 de part et d'autre du bras 10 pour indiquer la direction avant F_{AV} lorsque la tourelle 8 est dans son orientation initiale : cf. figures 1, 2 et 19.

Inversement, si la poignée de commande 32 est actionnée dans le sens de la flèche M_{AR} pour enclencher un déplacement du châssis 2 au sol dans la direction arrière F_{AR}, l'électronique de bord active l'indicateur visuel 70.i de la tourelle 8 qui est le plus proche du plan médian longitudinal du châssis 2 du côté arrière 2_{AR} du châssis 2 en laissant les autres inactifs. Il s'agit de l'indicateur 70.11 dans le cas des figures 7 et 8 et de l'indicateur 70.14 dans le cas des figures 11 et 12. Similairement au cas du déplacement en avant, en raison de l'absence d'indicateur 70i à l'endroit où repose le bras 10 en position abaissée sur la tourelle 8, il est avantageux d'allumer simultanément les deux indicateurs 70.9 et 70.10 de part et d'autre du bras 10 pour indiquer la direction arrière F_{AR} lorsque la tourelle 8 est dans son orientation initiale : cf. figures 1, 2 et 19.

De la sorte, l'opérateur à bord de la plate-forme 20 est informé directement de la direction de déplacement du châssis 2 au sol par simple observation des indicateurs visuels 70i sur la tourelle 8, sans effort intellectuel de sa part.

Pour la mise en œuvre de ce troisième aspect, la nacelle élévatrice 1 comprend au moins un capteur pour déterminer l'angle de rotation de la tourelle 8 par rapport au châssis 2, l'électronique de bord utilisant le signal fourni par ce capteur pour déterminer le ou les indicateurs 70i à activer. Ce capteur peut être de tout type approprié, par exemple une roue codeuse.

Ce troisième aspect est basé sur le principe selon lequel sont activés les indicateurs 70i de la tourelle 8 qui sont disposés du côté 2_{AV} ou 2_{AR} du châssis 2 correspondant à la direction de déplacement F_{AV} ou F_{AR} sélectionnée à la poignée de commande 32. Il peut être mis en œuvre suivant des variantes. Par exemple, en cas d'actionnement de la poignée de commande 32 pour enclencher un déplacement du châssis au sol dans la direction avant F_{AV}, l'électronique de bord active l'ensemble des indicateurs 70i de la tourelle 8 qui sont situés du côté vers l'avant 2_{AV} du châssis 2 par rapport à l'axe transversal T du châssis 2 passant par l'axe de rotation Z de la tourelle 8, et laisse ceux de l'autre côté à l'état inactifs. Ainsi, l'électronique de bord active les indicateurs 70.1 à 70.4 et 70.15 à 70.18 pour la configuration des figures 1 et 2. Inversement, en cas d'actionnement de la poignée de commande 32 pour enclencher un déplacement du châssis au sol dans la direction arrière F_{AR}, l'électronique de bord active l'ensemble des indicateurs 70i de la tourelle 8 qui sont situés du côté vers l'arrière 2_{AR} du châssis 2 par rapport à l'axe transversal T du châssis 2, et laisse ceux du côté avant à l'état inactifs. Ainsi, l'électronique de bord active les indicateurs 70.6 à 70.13 pour la configuration des figures 1 et 2.

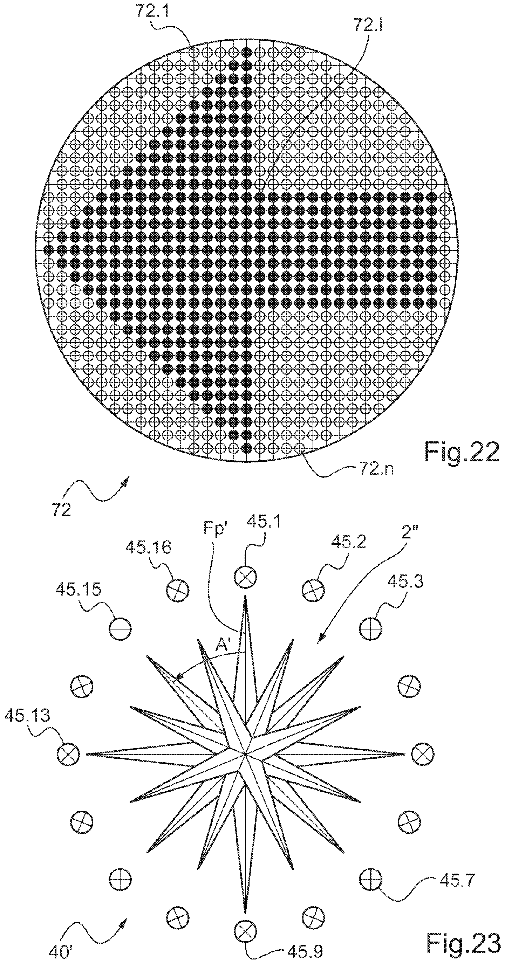

Suivant une variante au troisième aspect, le système de signalisation visuelle comprend un dispositif de visualisation sous la forme d'un afficheur 72 agencé sur la tourelle 8. Comme illustré par la figure 22, cet afficheur 72 est constitué par un ensemble d'indicateurs lumineux 72.1 à 72.n - par exemple des ampoules à diodes électroluminescentes (DEL) - agencés sur les intersections d'une grille fictive ayant de préférence un contour circulaire ou polygonale. L'électronique de bord active - ce qui consiste préférentiellement à allumer - un sous-ensemble des indicateurs 72.i en laissant les autres à l'état inactif - ce qui consiste préférentiellement à les éteindre - de manière à faire apparaître une flèche lumineuse pointant dans la direction de déplacement du châssis 2 au sol F_{AV} ou F_{AR} lorsque la poignée de commande 32 est actionnée dans la direction de la flèche M_{AV} ou M_{AR} respectivement. Dans les différentes figures, l'afficheur 72 est à chaque fois représenté en faisant apparaître une flèche lumineuse pointant dans la direction avant F_{AV}. L'afficheur 72 est préférentiellement agencé sur le dessus de la tourelle 8, ce qui lui confère une bonne visibilité depuis la plate-forme 20. Un deuxième afficheur 72 peut également être agencé sur le dessus de la tourelle 8 de manière qu'il y en ait un de part et d'autre du bras télescopique 10. Il peut aussi être prévu d'agencer - de préférence sensiblement verticalement - un ou plusieurs afficheurs 72 sur différents côtés de la tourelle 8 et/ou du châssis 2. Ceux-ci seront alors visibles pour les personnes au sol.

L'on comprendra que ce troisième aspect du système de signalisation visuelle est indépendant des premier et deuxième aspects décrits précédemment. Cependant, les deuxième et troisième aspects peuvent être combinés de différentes manières. Par exemple, les indicateurs visuels liés au châssis 2 peuvent être limités à ceux dédiés à indiquer la direction de déplacement avant F_{AV} lorsqu'une commande correspondante est enclenchée avec la poignée de commande 32 tandis que les indicateurs visuels 70.i de la tourelle 8 peuvent être dédiés uniquement à indiquer la direction de déplacement arrière F_{AR} lorsqu'une commande correspondante est enclenchée avec la poignée de commande 32.

Suivant un quatrième aspect, le système de signalisation visuelle active à l'écran 40 du pupitre 30 une indication visuelle informant l'opérateur de la direction de déplacement du châssis 2 au sol qui a été sélectionnée à la poignée de commande 32.

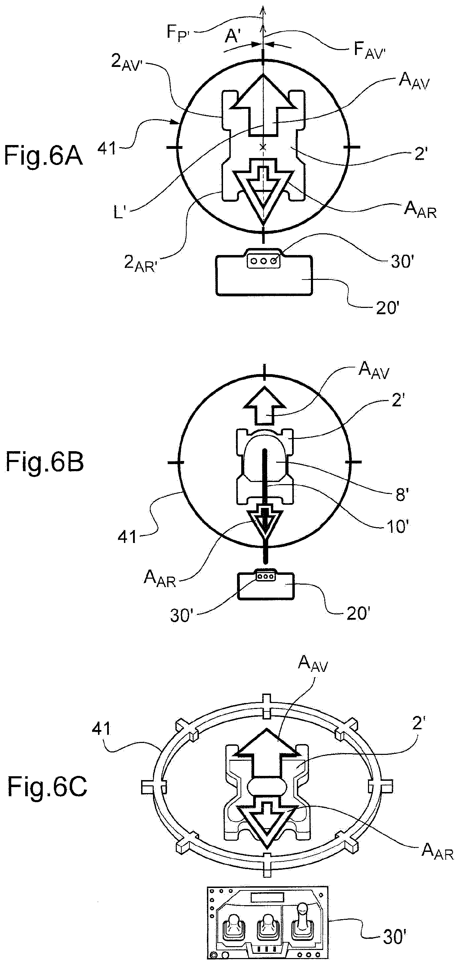

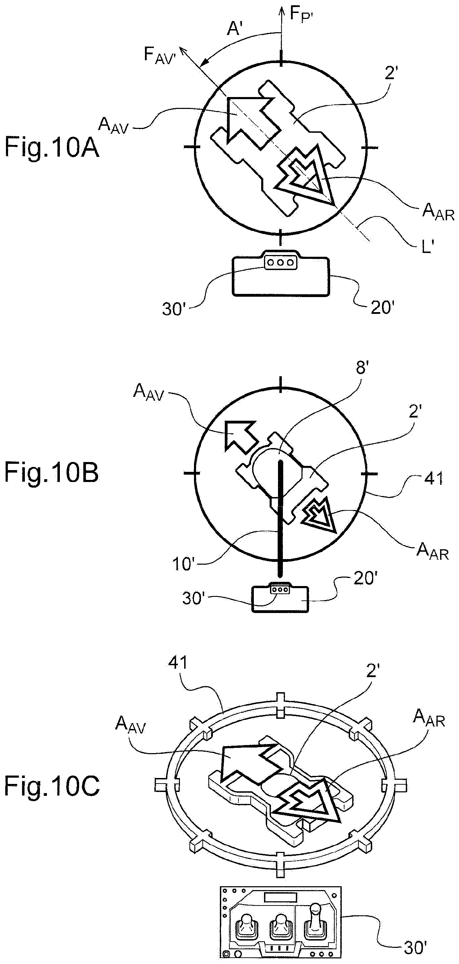

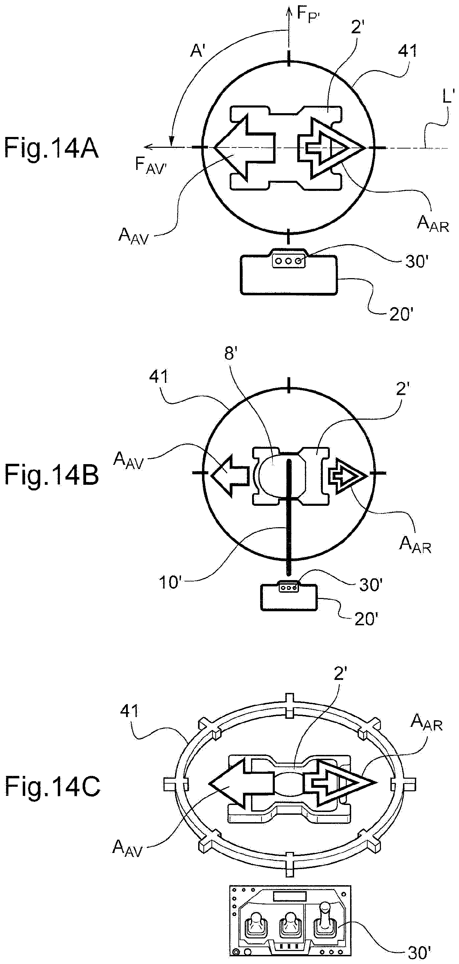

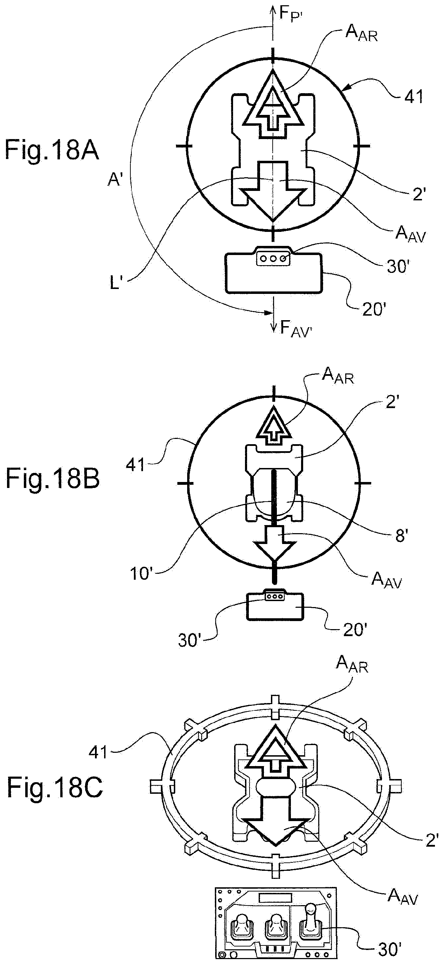

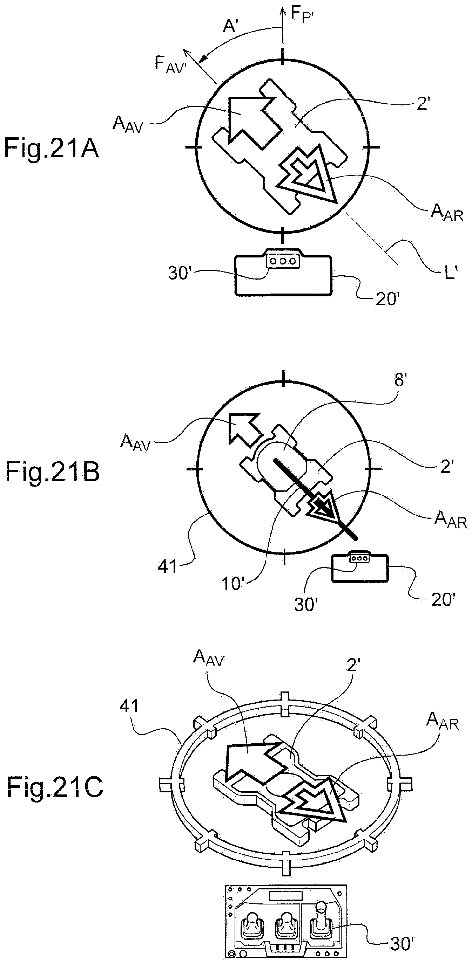

Les figures 6A, 10A, 14A, 18A et 21A illustrent l'affichage à l'écran 40 correspondant aux configurations de la nacelle élévatrice 1 représentées respectivement dans les figures 1 et 2 ; 7 et 8 ; 11 et 12 ; 15 et 16 ; et 19.

Une représentation graphique 2' du châssis 2 vue de dessus est affichée à l'écran 40.

Considéré dans le plan de la feuille des figures, l'axe vertical de l'écran 40 pris dans le sens bas vers le haut - référencé Fp' - est considéré conventionnellement comme représentatif de l'orientation du pupitre 30 définie par la flèche Fp. En effet, si l'écran est disposé horizontalement sur le pupitre 30, la direction de la flèche F_{P'} définissant l'orientation de l'écran 40 et la direction de la flèche F_{P} définissant l'orientation du pupitre 30 coïncident en toute circonstance, quel que soit l'azimut A du châssis 2 par rapport au pupitre 30. Du point de vue de l'opérateur devant le pupitre 30, il en est ainsi aussi lorsque l'écran 40 est incliné sur le pupitre 30 comme représenté, voire monté verticalement sur le pupitre 30, étant donné qu'il se tient devant l'écran 40.

La représentation graphique 2' du châssis 2 à l'écran 40 est affichée de manière à ce que son axe longitudinal L' - qui représente l'axe longitudinal L du châssis 2 - ait toujours - c'est-à-dire en temps réel - une orientation en concordance avec celle de l'axe longitudinal L du châssis 2. De plus, la représentation graphique 2' du châssis 2 est affichée à l'écran 40 avec une direction allant de l'arrière 2_{AR}' vers l'avant 2_{AV}'- notée F_{AV}' - qui est en concordance avec la direction F_{AV} définissant l'orientation du châssis 2, du moins lorsque la représentation graphique 2' du châssis 2 permet de distinguer le côté avant 2_{AV}' du côté arrière 2_{AR}'.

En d'autres termes, l'angle A' entre la direction F_{AV}' par rapport à la direction verticale F_{P'} correspond à l'azimut A du châssis 2 par rapport au pupitre 30.

En d'autres termes encore, si l'écran 40 est agencé horizontalement sur le pupitre 30, la direction F_{AV}' de la représentation graphique 2' du châssis 2 à l'écran 40 et la direction F_{AV} du châssis 2 sont parallèles et pointent dans la même direction. L'on comprendra que l'affichage à l'écran 40 reste identique même si l'écran est agencé de manière inclinée sur le pupitre 30 comme représenté, voire monté verticalement sur le pupitre 30. Autrement dit, si l'écran 40 est fictivement rendu horizontal de manière à le regarder par le dessus en le pivotant de manière imaginaire autour d'une droite horizontale comprise dans le plan de l'écran 40, la direction F_{AV}' de la représentation graphique 2' du châssis 2 à l'écran 40 et la direction F_{AV} du châssis 2 sont parallèles et pointent dans la même direction.

Par ailleurs, des représentations graphiques A_{AV} et A_{AR} similaires aux flèches M_{AV} et M_{AR} apposées à côté de la poignée de commande 32 - de préférence tant du point de vue de leur forme que de leur couleur - sont affichées à l'écran 40. La flèche A_{AV} est disposées de manière à toujours pointer dans la direction F_{AV}', la flèche A_{AR} pointant dans la direction opposée. Les flèches A_{AV} et A_{AR} affichées à l'écran 40 pointent donc dans des directions en concordance avec les directions de déplacement F_{AV} et F_{AR} du châssis 2 au sol.

Les flèches A_{AV} et A_{AR} sont préférentiellement affichées en permanence à l'écran 40, même en l'absence de sollicitation de la poignée de commande 32 pour déplacer le châssis 2 au sol. Ainsi, la similitude entre les flèches A_{AV} et A_{AR} à l'écran 40 avec celles M_{AV} et M_{AR} permettent à l'opérateur au pupitre 30 de vérifier - par comparaison visuelle - dans quelle direction solliciter la poignée de commande 32 pour déplacer le châssis 2 au sol dans la direction souhaitée. Cette vérification s'opère donc sur un principe similaire au premier aspect du système de signalisation visuelle décrit plus haut, mais par observation de l'affichage à l'écran 40 à la place des indicateurs visuels 63a, 63b, 64a, 64b solidaires du châssis 2. Un avantage est que l'affichage de l'écran 40 reste toujours visible de la même manière pour l'opérateur au pupitre 30, quel que soit la position de la plate-forme 20.

Lorsque la poignée de commande 32 est actionnée pour déplacer le châssis 2 au sol, une indication visuelle est activée sur l'affichage à l'écran 40 pour indiquer la direction de déplacement F_{AV} ou F_{AR} sélectionnée. L'activation d'une indication visuelle à l'écran 40 consiste en un affichage d'un nouvel élément graphique et/ou un changement d'état visuel d'un élément graphique déjà affiché à l'écran 40.

Par analogie au deuxième aspect du système de signalisation visuelle, elle peut être mise en œuvre de la manière suivante.

Lorsque la poignée de commande 32 est actionnée dans le sens de la flèche M_{AV} pour enclencher un déplacement du châssis 2 au sol dans la direction avant F_{AV}, le poste de commande 30 active la flèche A_{AV} sur l'affichage à l'écran 40 tandis que la flèche A_{AR} continue à être affichée sous sa forme inactive. Inversement, si la poignée de commande 32 est actionnée dans le sens de la flèche M_{AR} pour enclencher un déplacement du châssis 2 au sol dans la direction arrière F_{AR}, le poste de commande 30 active la flèche A_{AR} à l'écran 40 tandis que la flèche A_{AV} reste affichée sous sa forme inactive. De la sorte, l'opérateur à bord de la plate-forme 20 est informé directement de la direction de déplacement du châssis 2 au sol par simple observation de l'écran 40, sans effort intellectuel de comparaison avec les flèches M_{AV} et M_{AR} apposées à côté de la poignée de commande 32.

Préférentiellement, l'affichage des flèches A_{AV} et A_{AR} sous leur forme inactive consiste en un affichage avec une forme et une couleur figée, tandis que leur affichage sous la forme active consiste soit en une accentuation de la couleur de la flèche concernée et/ou en un grossissement de celle-ci, soit en une animation alternant grossissement et rapetissement pour donner une impression de pulsations visuelles à la manière d'un cœur qui bat.

En variante, les flèches A_{AR} et A_{AV} ne sont pas affichées en permanence à l'écran 40. Lorsque la poignée de commande 32 est actionnée pour enclencher un déplacement du châssis 2 au sol, le poste de commande 30 affiche alors à l'écran la flèche A_{AR} ou A_{AV} qui correspond à la direction de déplacement sélectionnée à la poignée 32.

Suivant une autre variante, les flèches A_{AR} et A_{AV} sont remplacées à l'écran 40 par une indication visuelle de forme quelconque autre que pointant une direction et affichée du côté 2_{AV}' ou 2_{AR}' de la représentation graphique 2' du châssis qui correspond à la direction de déplacement sélectionnée à la poignée de commande 32.

Pour la mise en œuvre de ce quatrième aspect, la nacelle élévatrice 1 comprend un ou plusieurs capteurs appropriés pour déterminer l'azimut A. De préférence, il est prévu pour chaque possibilité de pivotement autour d'un axe vertical dans la chaine cinématique entre le pupitre 30 et le châssis 2 au moins un capteur pour déterminer l'angle de pivotement correspondant. En l'occurrence, un tel capteur est prévu pour déterminer l'angle de rotation de la tourelle 8 par rapport au châssis 2 et un autre pour l'angle de pivotement de la plate-forme 20 par rapport au bras 12. Ces capteurs peuvent être de tout type approprié, connu en soi. Sur la base des signaux de ces capteurs, l'électronique de bord calcule l'azimut A qui est ensuite utilisé pour afficher la représentation graphique 2' du châssis 2 avec l'orientation suivant l'angle A' correspondant.

L'on comprendra que la variation de l'angle A' avec lequel est affiché la représentation graphique 2' à l'écran 40 - lorsque l'azimut A varie - peut être discrète au lieu de continue, par exemple avec un pas de 5°. Il est préférable que le pas soit suffisamment petit pour rendre compte à l'écran 40 de l'azimut A de manière réaliste afin d'assister utilement l'opérateur lors de commandes de déplacement du châssis au sol. De ce point de vue, le pas est de préférence inférieur ou égal à 15°.

Il est avantageux d'afficher à l'écran 40 une représentation graphique 20', 30' de la plate-forme 20 et/ou du pupitre 30 dans une position basse de l'écran 40 en conformité avec l'orientation F_{P'} correspondant à l'orientation Fp. Cela permet à l'opérateur de plus facilement comprendre que l'écran 40 affiche l'orientation relative du châssis 2 par rapport au pupitre 30. Similairement, un cercle 41 avec des repères représentatifs des directions principales à la façon d'une boussole, entourant la représentation graphique du châssis 2 et de la plate-forme 20 renforce sa compréhension de l'affichage.

L'on comprendra que les flèches F_{P'} et F_{AV}' et l'axe L' sont représentées dans les figures pour les besoins de l'explication, mais n'ont pas besoin d'être effectivement affichées à l'écran 40.

Les figures 6C, 10C, 14C, 18C et 21C illustrent une variante d'affichage par rapport aux figures 6A, 10A, 14A, 18A et 21A, dans laquelle les représentations graphiques notamment celle 2' du châssis 2 sont faites en perspective donnant un effet 3D. Dans cet exemple, la plate-forme 20 n'est pas représentée.

Les figures 6B, 10B, 14B, 18B et 21B illustrent une autre variante d'affichage par rapport aux figures 6A, 10A, 14A, 18A et 21A. Dans cette variante, l'affichage est plus complet dans le sens qu'il comprend aussi une représentation graphique 8' de la tourelle 8 et une représentation graphique 10' des bras 10 et 12. Outre l'azimut A, les représentations graphiques 2', 8', 10', 20' et 30' respectent aussi la disposition relative en vue de dessus des éléments correspondants 2, 8, 10, 12, 20 et 30.

D'autres variantes d'affichage à l'écran 40 sont envisageables. Suivant une variante, il s'agit d'une version simplifiée dans laquelle le châssis 2 n'est pas représenté graphiquement à l'écran 40, mais seulement son axe longitudinal L suivant lequel il se déplace, par exemple sous la forme d'un simple segment de droite orienté selon l'axe L'. Dans ce cas aussi, la direction de déplacement du châssis 2 au sol peut être indiquée à l'écran 40 des différentes manières déjà décrites.

Le système de signalisation visuelle suivant le quatrième aspect peut aussi être mis en œuvre de manière simplifié. A titre d'exemple, l'écran 40 peut être remplacé sur le pupitre de commande 30 par le dispositif de visualisation 40' illustré à la figure 23. Le dispositif de visualisation 40' comprend une représentation graphique fixe d'une rose des vents 2", par exemple sous la forme d'un marquage réalisé sur la plaque sur laquelle sont montées les organes de commande 31, 32. Le dispositif de visualisation 40' comprend en outre un indicateur lumineux 45.i respectif à l'extrémité de chaque branche de la rose des vents 2".

Considéré dans le plan de la feuille de la figure 23, la branche verticale orientée vers le haut F_{P'} de la rose des vents 2" est considérée conventionnellement comme représentatif de l'orientation du pupitre 30 définie par la flèche Fp, de manière analogue au cas de la mise en œuvre sur la base de l'écran 40 décrite plus haut. Les différentes branches de la rose des vents 2" en référence à la branche verticale F_{P'} symbolisent les différentes orientations que peut prendre le châssis 2 par rapport au pupitre 30.

Lorsque la poignée de commande 32 est actionnée dans la direction M_{AV} ou M_{AR}, le dispositif de visualisation 40' active l'indicateur lumineux 45.i à l'extrémité de la branche de la rose des vents 2" adéquate pour indiquer la direction correspondante de déplacement du châssis 2 au sol tandis que les autres indicateurs lumineux 45.i sont laissés inactifs. Autrement dit, s'agissant de l'actionnement de la poignée de commande 32 dans la direction M_{AV}, le dispositif de visualisation 40' active l'indicateur lumineux 45.i à l'extrémité de la branche de la rose des vents faisant un angle à partir de la branche verticale F_{P'} qui correspond sensiblement à l'azimut A. Pour la situation des figures 7 à 9, il s'agit de l'indicateur 45.15 : cf. l'angle A' sur la figure 23 correspondant à l'azimut A dans ce cas. Si la poignée de commande 32 est actionnée dans la direction M_{AR}, c'est l'indicateur 45.7 de la branche opposée qui est activé.

Selon une variante encore plus simple, la rose des vents 2" est omise, le cadran gradué formé intrinsèquement par les indicateurs lumineux 45.i étant suffisant en lui-même pour identifier la direction de déplacement du châssis suivant sa direction azimutale.

Par ailleurs, l'on comprendra que le dispositif de visualisation 40' peut aussi être mis en œuvre dans le cadre du système de visualisation suivant le troisième aspect décrit plus haut. Autrement dit, un tel dispositif de visualisation 40' peut être agencé sur la tourelle 8 - similairement à l'afficheur 72 décrit plus haut - pour indiquer la direction de déplacement du châssis 2 au sol. Dans ce cas, il est préférable d'agrandir le dispositif de visualisation 40' afin d'améliorer sa visibilité depuis la plate-forme 20.

Le système de signalisation visuelle suivant le quatrième aspect - qui est basé sur un dispositif de visualisation agencé sur le pupitre de commande - est particulièrement avantageux puisque l'opérateur connaît la direction de déplacement du châssis 2 au sol, même si l'environnement (brouillard, obscurité, pluie, surplomb d'un obstacle, etc.) ne lui permet pas de voir distinctement le châssis 2, la tourelle 8 et les signalisations visuelles agencées sur ceux-ci. Il peut en outre être prévu sur le châssis 2 une caméra sur le côté avant 2_{AV} et une autre sur le côté arrière 2_{AR} filmant dans les directions F_{AV} et F_{AR} respectivement. Les images des caméras sont affichées à l'écran 40, en plus de la signalisation visuelle précédemment décrite, lors d'une commande de déplacement du châssis 2 au sol à partir du pupitre 30 pour assister au mieux l'opérateur.

Suivant un mode de réalisation particulièrement avantageux, le système de signalisation visuelle active la signalisation visuelle indicative de la direction de déplacement F_{AV} ou F_{AR} du châssis 2 - ou selon la cas la signalisation visuelle identifiant le côté correspondant 2_{AV} ou 2_{AR} du châssis 2 - qui correspond à la direction M_{AV} ou M_{AR} dans laquelle la poignée de commande 32 est actionnée, même en l'absence d'actionnement simultané de l'organe de validation 50. Dans ce cas, l'actionnement de la poignée de commande 32 ne provoque pas le déplacement du châssis 2 au sol, mais l'opérateur est néanmoins informé par le système de signalisation visuelle de la direction de déplacement du châssis 2 au sol correspondant à la direction d'actionnement de la poignée de commande 32. L'opérateur peut ainsi vérifier la direction de déplacement du châssis 2 au sol correspondant à une direction d'actionnement de la poignée de commande 32, préalablement au déplacement effectif du châssis 2 au sol. Ce mode de réalisation peut être mis en œuvre, indépendamment du type de signalisation visuelle activable qui est mise en œuvre par le système de signalisation visuelle, et en particulier peu importe qu'il soit conçu selon le deuxième, troisième ou quatrième aspect, ou une combinaison de ceux-ci.

Quel que soit le ou les aspects précédemment décrits selon lequel il est mis en œuvre, le système de signalisation visuelle peut en outre être prévu pour fournir des informations additionnelles à l'opérateur.

Sur les chantiers, les nacelles élévatrices peuvent être pilotées par plusieurs utilisateurs et à des moments différents. Lorsqu'un opérateur effectue la prise de poste, il y a un risque de confusion de la direction du mouvement si l'utilisateur précédent n'a pas repositionné la nacelle dans l'orientation initiale. C'est particulièrement le cas si la tourelle est à 180° par rapport à l'orientation initiale. Pour limiter ce risque, le système de signalisation visuelle peut être prévu pour activer, à la mise sous tension de la nacelle élévatrice, pendant une durée prédéterminée - par exemple 3 secondes - l'ensemble de ses indicateurs visuels : flèches sur le châssis 63a, 63b, 64a, 64b, les indicateurs 70.i et flèches A_{AV}, A_{AR} selon le cas. Cela permet de vérifier le fonctionnement des indicateurs visuels. En outre, l'activation peut être différente selon que - à la mise sous tension - la tourelle 8 est orientée par rapport au châssis 2 vers sa position de repos - c'est-à-dire lorsque l'angle entre F_{T} et F_{AV} est compris dans l'intervalle de -90° à +90° pris dans le sens trigonométrique, ou vers l'autre côté - c'est-à-dire lorsque l'angle entre F_{T} et F_{AV} est compris dans l'intervalle allant de +90° à 270° pris dans le sens trigonométrique-, ce qui permet d'attirer l'attention de l'opérateur sur une éventuelle inversion de la tourelle. Par exemple, l'allumage des indicateurs visuels peut être continu dans le premier cas et clignotant dans le deuxième cas.

A la mise hors tension de la nacelle élévatrice, le système de signalisation visuelle peut être prévu pour activer pendant une durée prédéterminée - par exemple 3 secondes - l'ensemble de ses indicateurs visuels ou au moins certains d'entre eux, de préférence de manière clignotante, dans le cas où la tourelle 8 est orientée vers le côté opposé à sa position de repos, c'est-à-dire lorsque l'angle entre F_{T} et F_{AV} est dans l'intervalle précité allant de +90° à 270°. Au contraire, il n'active aucun indicateur visuel si la tourelle 8 est orientée du côté de sa position de repos, c'est-à-dire lorsque l'angle entre F_{T} et F_{AV} est dans l'intervalle précité allant de -90° à +90°. Cela permet d'attirer l'attention de l'opérateur sur une éventuelle inversion de la tourelle 8 et donc de décider de la placer dans une position non inversée.

Aux mêmes fins, en service, le système de signalisation visuelle peut être prévu pour activer ses indicateurs visuels, de préférence en les faisant clignoter, lorsque la tourelle 8 est orientée vers le côté opposé à sa position de repos dans le cas où l'organe de validation 50 est actionné, mais sans actionnement simultané d'une commande du poste de commande 30 qui est conditionnée par l'organe de validation 50.

Similairement, dans la cadre du quatrième aspect, le système de signalisation visuelle peut être prévu pour que le changement affectant la flèche A_{AR} à l'écran 40 lorsqu'elle est activée soit différent de celui affectant la flèche A_{AV} lorsqu'elle est activée. Il est avantageux que le changement affectant la flèche A_{AR} attire plus l'attention que celui affectant la flèche A_{AV}. Par exemple, l'activation de la flèche A_{AV} peut consister en une accentuation de couleur et/ou un grossissement, tandis que l'activation de la flèche A_{AR} comprend en outre son clignotement.

Bien entendu, la présente invention n'est pas limitée aux exemples et au mode de réalisation décrits et représentés, mais elle est susceptible de nombreuses variantes accessibles à l'homme de l'art.

Ainsi, l'organe de commande à actionnement manuel du pupitre 30 pour déplacer le châssis 2 au sol peut être différent de la poignée de commande 32 : il peut s'agir, par exemple, de deux boutons poussoir correspondant chacun à une direction de déplacement respective.

Par ailleurs, la vérification préalable de la direction de déplacement du châssis 2 au sol par rapport à la direction d'actionnement de la poignée de commande 32 peut être affecté à un organe à actionnement manuel dédié, agencé de préférence sur le pupitre de commande 30, et inhibant le déplacement au sol du châssis 2 lorsqu'il est actionné, en remplacement du rôle rempli par l'organe de validation 50 à cet égard.

De surcroît, l'invention s'applique à tout type de nacelles élévatrices automotrices dont le déplacement au sol est susceptible d'être commandé par un opérateur à bord de sa plateforme de travail dès lors que l'azimut A du châssis par rapport au pupitre de commande monté à demeure sur la plate-forme de travail est susceptible de changer, peu importe le nombre de liaisons pivots verticaux existants dans la chaine cinématique entre le châssis et le pupitre de commande. En particulier, l'invention s'applique aussi aux nacelles articulées et aux nacelles élévatrices à mâts verticaux.

Enfin, l'invention s'applique aussi aux nacelles élévatrices automotrices pour lesquelles le pupitre de commande n'est pas agencé fixement sur la plate-forme de travail, mais est amovible par l'opérateur en cours d'utilisation de la nacelle élévatrice.

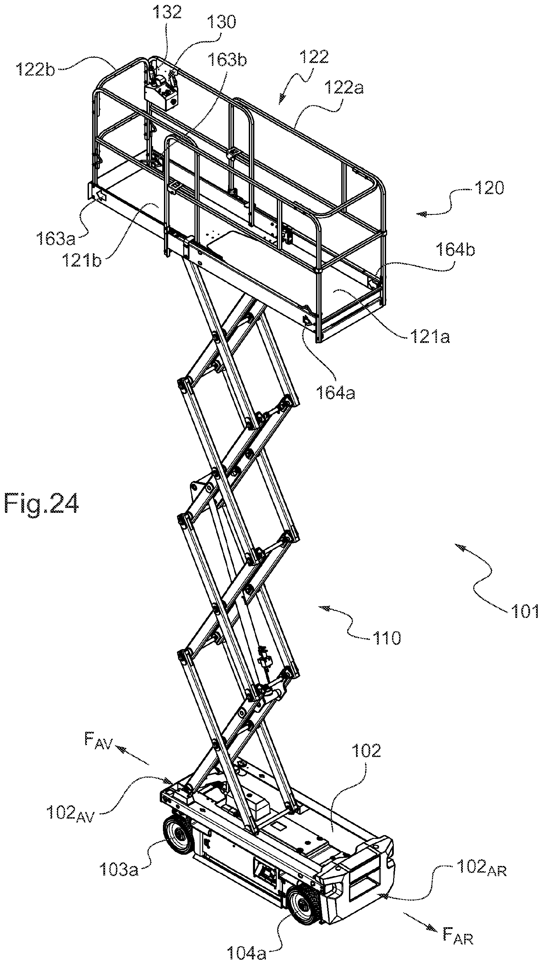

Les figures 24 à 26 illustrent ce cas de figure pour une nacelle élévatrice à ciseaux 101. Elle comprend un châssis 102 monté sur quatre roues (seules deux d'entre elles 103a, 104a étant visibles), dont deux au moins sont directrices. Le châssis 102 est motorisé pour son déplacement au sol dans la direction avant F_{AV} (correspondant au côté avant du châssis 102_{AV}) et la direction arrière F_{AR} (correspondant au côté arrière du châssis 102_{AR}). Le système de levage 110 monté sur le châssis 102 comprend un mécanisme de poutres articulées en ciseaux empilés les uns sur les autres. Un ou plusieurs vérins hydrauliques permettent d'élever et abaisser verticalement la plate-forme de travail 120. La plate-forme de travail 120 peut être extensible comme celle représentée. Pour cela, elle comprend une première partie 121a supportée par la structure élévatrice 110 à ciseaux et une deuxième partie 121b montée coulissante par rapport à la première partie 121a. De ce fait, le garde-corps 122 est également réalisé en deux parties 122a, 122b coulissantes l'une par rapport à l'autre.

Un pupitre de commande 130 est agencé sur la plate-forme 120. Le pupitre de commande 130 permet classiquement d'abaisser et d'élever la plate-forme 120, de faire déplacer le châssis 102 au sol en direction avant F_{AV} et en direction arrière F_{AR} et de modifier l'orientation des roues directrices.

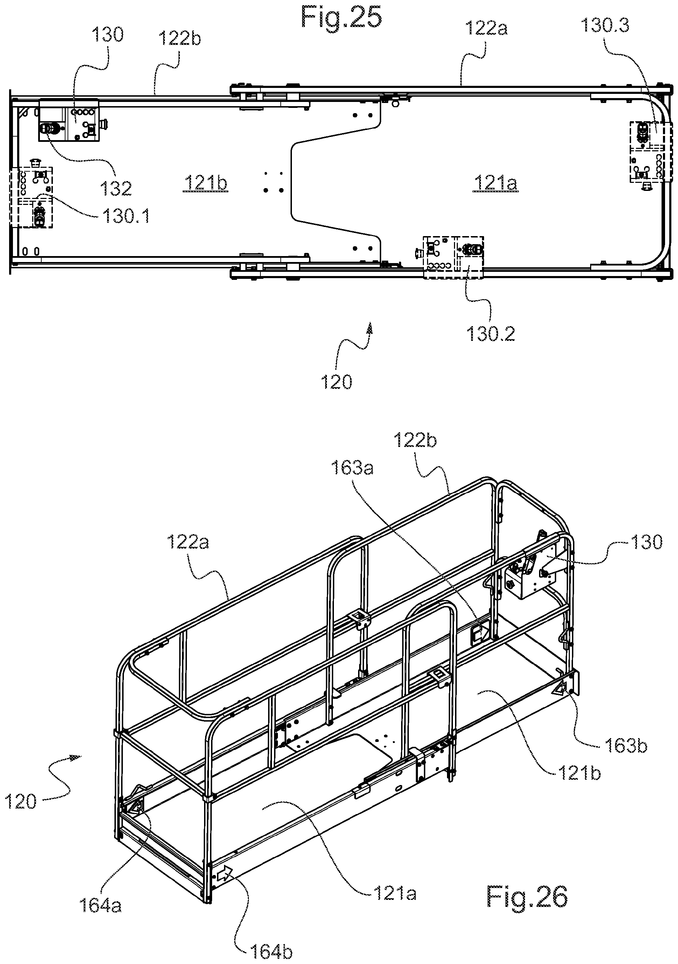

Le pupitre de commande 130 est prévu pour être déplaçable par l'opérateur de manière à pouvoir l'accrocher de façon amovible en différents endroits du garde-corps 122. Sur la figure 24, le pupitre de commande 130 est accroché dans sa position préférentielle d'accrochage sur le garde-corps 122 : c'est le cas aussi sur la figure 25 sous sa référence 130. Le pupitre de commande 130 est verrouillable sur le garde-corps 122 à cet endroit, l'opérateur pouvant opérer son verrouillage ou déverrouillage. La position verrouillée évite un déplacement accidentel du pupitre 130 sur le garde-corps 122, voire un décrochement, notamment lors du transport de la nacelle élévatrice par camion.

La figure 25 représente trois exemples d'autres endroits sur le garde-corps 122 où le pupitre de commande est accroché : cf. les références 130.1, 130.2 et 130.3. Par mesure de simplicité, il est préférable de ne pas prévoir de possibilité de verrouillage du pupitre de commande 130 sur le garde-corps 122 en-dehors de la position préférentielle d'accrochage.

Le pupitre 130 peut en outre être prévu pour que l'opérateur puisse le tenir d'une seule main et manipuler ses organes de commande de l'autre, ce qui permet notamment de commander la nacelle-élévatrice 101 depuis le sol au lieu de la plate-forme 120.

Bien entendu, le pupitre de commande 130 est en communication avec l'électronique de bord installé sur le châssis de la nacelle élévatrice par une liaison appropriée, que ce soit une liaison filaire ou sans fil.

Comme cela est visible des différents exemples de position du pupitre de commande 130 sur la figure 25, l'orientation du pupitre de commande 130 par rapport au châssis 102 est variable en cours d'utilisation de la nacelle élévatrice du fait qu'il est amovible et déplaçable par l'opérateur, bien que l'orientation de la plate-forme 120 par rapport au châssis 102 soit constante. Autrement dit, l'azimut du châssis 102 par rapport au pupitre de commande 130 peut varier en cours d'utilisation de la nacelle élévatrice.

Pour éviter que l'opérateur ne confonde les directions avant F_{AV} et arrière F_{AR} de déplacement du châssis 102 au sol, la nacelle élévatrice 101 est équipée d'un système de signalisation visuelle comprenant un ou plusieurs indicateurs lumineux activables pour identifier la direction de déplacement sélectionnée au pupitre de commande 130. Il est préférable qu'il en comprenne au moins deux, l'un pour pointer dans la direction avant F_{AV} et l'autre dans la direction arrière F_{AR}. Mais il est plus avantageux encore qu'il y en ait quatre, ce qui est le cas dans l'exemple illustré : cf. les indicateurs lumineux 163a, 163b, 164a, 164b.

Il est avantageux que ces indicateurs lumineux soient agencés sur la plate-forme 120 elle-même. En effet, pour une nacelle élévatrice à ciseaux, ils sont plus facilement visibles de l'opérateur à bord de la plate-forme que s'ils sont placés sur le châssis et la mise en œuvre est simple puisque l'orientation de la plate-forme 120 est fixe par rapport au châssis 102.

Comme cela est illustré, les indicateurs lumineux 163a, 163b, 164a, 164b ont avantageusement une forme de flèche. Deux d'entre eux sont agencés vers l'avant de la plate-forme 120 et pointent chacun dans une autre des directions avant F_{AV} et arrière F_{AR}. Deux autres sont agencés vers l'arrière de la plate-forme 120 et pointent aussi chacun dans une autre des directions avant F_{AV} et arrière F_{AR}. Il est avantageux que les indicateurs lumineux pointant vers l'avant et ceux pointant vers l'arrière aient une forme et/ou une couleur différentes qui sont reprises sous forme de marquage sur le pupitre de commande au niveau de ou des organes de commande du déplacement du châssis 103 au sol, similairement au deuxième aspect du système de signalisation visuelle décrit plus haut pour une nacelle élévatrice à bras.

En cas d'actionnement de l'organe 132 de commande de déplacement du châssis au sol, le système de signalisation visuelle active ceux des indicateurs 163a, 163b, 164a, 164b qui pointent dans la direction de déplacement sélectionnée tandis que les autres sont maintenus inactifs.

Il est avantageux d'intégrer ces indicateurs lumineux dans ou sur des plinthes encadrant le bas du garde-corps 122 de la plate-forme de travail 120 comme illustré, ceci par commodité de câblage et limitation du risque de chocs lors des manipulations de matériels à bord de la plate-forme 120.

Par ailleurs, il est avantageux que ces indicateurs lumineux soient traversant dans la plinthe comme illustré - ou bien dédoublés à l'intérieur et à l'extérieur de la plinthe - afin d'être visibles à la fois depuis l'intérieur et l'extérieur de la plate-forme 120.

Bien entendu, il peut aussi être prévu sur le pupitre de commande 130 un organe à actionnement manuel inhibant le déplacement du châssis 102 au sol lorsqu'il est actionné - ou, au contraire, s'il n'est pas actionné dans le cas d'un organe de validation de type « homme mort » - aux fins de vérification préalable de la direction de déplacement sélectionnée au pupitre de commande 130 à la vue de ceux des indicateurs lumineux 163a, 163b,164a, 164b qui sont activés.

Par ailleurs, l'on comprendra que le système de signalisation visuelle peut faire l'objet de nombreuses variantes. Par exemple, les indicateurs lumineux peuvent avoir une forme quelconque sans orientation particulière afin d'identifier par leur activation le côté de la nacelle élévatrice correspondant à la direction de déplacement sélectionnée. Selon un autre exemple, les indicateurs 163a, 163b, 164a, 164b, sont remplacés par un ou plusieurs afficheurs conformes à celui décrit en référence à la figure 22 afin d'afficher chacun une flèche lumineuse pointant dans la direction de déplacement sélectionnée.

Enfin, le pupitre de commande 130 peut être équipé d'un dispositif de visualisation pour identifier visuellement la direction de déplacement sélectionnée similairement au quatrième aspect décrit plus haut pour une nacelle élévatrice à bras. Dans ce cas, le système de visualisation comprendra un ou plusieurs capteurs appropriés pour déterminer l'azimut du châssis 102 par rapport au pupitre de commande 130. A titre d'exemple, il peut être recouru à deux boussoles électroniques connues en soi et disponibles dans le commerce : l'une est fixée sur le châssis 102 pour fournir son azimut par rapport aux point cardinaux et l'autre est intégrée au pupitre de commande 130 pour fournir l'azimut de ce dernier par rapport aux point cardinaux. Le système de signalisation visuelle détermine alors l'azimut du châssis 102 par rapport au pupitre de commande 130 en calculant leur différence.

Plus généralement, l'on comprendra que les différentes variantes du système de signalisation visuelle exposées plus haut pour une nacelle élévatrice à bras s'appliquent *mutatis mutandis* au cas de la nacelle élévatrice à ciseaux, excepté pour ce qui concerne la tourelle qui est inexistante pour ces dernières.

## Revendications

1. Nacelle élévatrice automotrice (1 ; 101), comprenant :
- un châssis (2 ; 102) présentant un axe longitudinal (L) suivant lequel le châssis est apte à se déplacer au sol dans une direction avant (F_{AV}) et dans une direction arrière (F_{AR}) opposée à la direction avant ;
- une plate-forme de travail (20 ; 120),
- une structure élévatrice (6 ; 110) montée sur le châssis et supportant la plate-forme de travail,
- un pupitre de commande (30 ; 130) permettant de :
∘ commander la structure élévatrice pour déplacer la plate-forme jusqu'à une position de travail en hauteur, et
∘ déplacer sélectivement le châssis au sol dans la direction avant (F_{AV}) et dans la direction arrière (F_{AR}),
**caractérisée en ce que** la nacelle élévatrice comprend en outre un système de signalisation visuelle pour indiquer la direction de déplacement du châssis au sol sélectionnée au pupitre de commande (30 ; 130) parmi les directions avant et arrière (F_{AV}, F_{AR}) par activation d'au moins une indication visuelle (63a, 63b, 64a, 64b ; 70.i ; 72 ; 163a, 163b, 164a, 164b) :
∘ localisée du côté du châssis qui correspond à la direction de déplacement sélectionnée, ou
∘ ayant une forme orientée pointant dans la direction de déplacement sélectionnée.

2. Nacelle élévatrice selon la revendication 1, dans laquelle le système de signalisation visuelle comprend au moins un indicateur visuel (63a, 63b, 64a, 64b) solidarisé au châssis que le système de signalisation visuelle active pour procurer l'indication visuelle d'au moins l'une des directions avant et arrière (F_{AV}, F_{AR}).

3. Nacelle élévatrice selon la revendication 2, dans laquelle le système de signalisation visuelle comprend :
- un premier et un deuxième indicateurs visuels (63a, 63b) solidarisés au châssis et localisés du côté avant (2_{AV}) du châssis, et
- un troisième et un quatrième indicateurs visuels (64b, 64a) solidarisés au châssis et localisés du côté arrière (2_{AR}) du châssis,
dans laquelle :
- le système de signalisation visuelle active le premier et le troisième indicateurs visuels (63a, 64b) pour procurer chacun l'indication visuelle de la direction avant (F_{AV}) sous la forme d'une forme orientée pointant dans la direction avant (F_{AV}), et
- le système de signalisation visuelle active le deuxième et le quatrième indicateurs visuels (63b, 64a) pour procurer chacun l'indication visuelle de la direction arrière (F_{AR}).sous la forme d'une forme orientée pointant dans la direction arrière (F_{AR}).

4. Nacelle élévatrice selon la revendication 3, dans laquelle :
- le premier et le quatrième indicateurs visuels (63a, 64a) sont en outre localisés vers un même côté latéral du châssis (2), et
- le deuxième et le troisième indicateurs visuels (63b, 64b) sont en outre localisés vers l'autre côté latéral du châssis (2).

5. Nacelle élévatrice selon la revendication 4, dans laquelle :
- le châssis (2) est monté sur deux roues avant (3a, 3b) et deux roues arrière (4a, 4b) par l'intermédiaire desquelles le châssis se déplace au sol, et
- chacun desdits indicateurs visuels (63a, 63b, 64a, 64b) est agencé au-dessus de l'une respective des roues.

6. Nacelle élévatrice selon la revendication 5, dans laquelle :
- la structure élévatrice comprend :
o une tourelle (8) montée pivotante autour d'un axe vertical (Z) sur le châssis (2) ; et
∘ un mécanisme de levage (10, 12) de la plate-forme de travail (20) lequel est monté sur la tourelle (8), la plate-forme de travail étant déportée d'un côté par rapport à la tourelle, et
- lesdits indicateurs visuels (63a, 63b, 64a, 64b) sont localisés de manière qu'au moins deux d'entre eux se succédant sur le pourtour du châssis (2) du côté correspondant à la plate-forme (20) soient libres de superposition par la tourelle (8), quel que soit l'orientation de la tourelle (8) par rapport au châssis (2).

7. Nacelle élévatrice selon l'une quelconque des revendications 1 à 6, dans laquelle :
- la structure élévatrice (6) comprend :
∘ une tourelle (8) montée pivotante autour d'un axe vertical (Z) sur le châssis (2) ; et
∘ un mécanisme de levage (10, 12) de la plate-forme de travail (20) lequel est monté sur la tourelle (8), et
- le système de signalisation visuelle comprend :
∘ au moins un capteur pour déterminer l'orientation de la tourelle (8) par rapport au châssis (2), et
∘ au moins un indicateur visuel (70.i ; 72) agencé sur la tourelle que le système de signalisation visuelle active pour procurer l'indication visuelle d'au moins l'une des directions avant et arrière.

8. Nacelle élévatrice selon la revendication 7, dans laquelle le système de signalisation visuelle comprend une pluralité d'indicateurs visuels (70.i) agencés sur la tourelle (8) et répartis angulairement autour de l'axe vertical (Z) de la tourelle, le système de signalisation procurant l'indication visuelle d'au moins l'une des directions avant et arrière (F_{AV}, F_{AR}) en activant au moins un des indicateurs visuels (70.i) localisé du côté longitudinal (2_{AR}, 2_{AV}) correspondant du châssis (2).

9. Nacelle élévatrice selon l'une quelconque des revendications 1 à 5, dans laquelle :
- l'orientation de la plate-forme de travail (120) est fixe par rapport au châssis (102), la structure élévatrice (110) étant préférentiellement un mécanisme en ciseaux, et
- le système de signalisation visuelle comprend au moins un indicateur visuel (163a, 163b, 164a, 164b) solidarisé à la plate-forme de travail que le système de signalisation visuelle active pour procurer l'indication visuelle d'au moins l'une des directions avant et arrière (F_{AV}, F_{AR}), ledit au moins un indicateur visuel étant préférentiellement agencé sur ou intégré dans des plinthes encadrant le bas d'un garde-corps (122) de la plate-forme de travail (120), ledit au moins un indicateur visuel étant encore plus préférentiellement agencé traversant dans les plinthes ou dédoublé à l'intérieur et à l'extérieur de la plinthe correspondante pour être visible à la fois depuis l'intérieur et l'extérieur de la plate-forme de travail (120).

10. Nacelle élévatrice selon la revendication 9, dans laquelle :
- le système de signalisation visuelle comprend au moins deux indicateurs lumineux (163a, 163b, 164a, 164b) solidarisés à la plate-forme de travail (120), l'un pointant dans la direction avant (F_{AV}) et l'autre pointant dans la direction arrière (F_{AR}), et
- le système de signalisation visuelle est prévu pour activer celui des indicateurs (163a, 163b, 164a, 164b) qui pointe dans la direction de déplacement sélectionnée au pupitre de commande (130) parmi les directions avant et arrière (F_{AV}, F_{AR}) tandis que l'autre est maintenu inactif.

11. Nacelle élévatrice selon la revendication 9 ou 10, dans laquelle :
- le système de signalisation visuelle comprend quatre indicateurs lumineux (163a, 163b, 164a, 164b) solidarisés à la plate-forme de travail (120), deux d'entre eux étant agencés vers l'avant de la plate-forme (120) et pointant chacun dans une autre des directions avant et arrière (F_{AV}, F_{AR}) et les deux autres étant agencés vers l'arrière de la plate-forme (120) et pointant chacun dans une autre des directions avant et arrière (F_{AV}, F_{AR}), et
- le système de signalisation visuelle est prévu pour activer ceux des quatre indicateurs (163a, 163b, 164a, 164b) qui pointent dans la direction de déplacement sélectionnée au pupitre de commande (130) parmi les directions avant et arrière (F_{AV}, F_{AR}) tandis que les autres sont maintenus inactifs.

12. Nacelle élévatrice automotrice, comprenant :
- un châssis (2) présentant un axe longitudinal (L) suivant lequel le châssis est apte à se déplacer au sol dans une direction avant (F_{AV}) et dans une direction arrière (F_{AR}) opposée à la direction avant ;
- une plate-forme de travail (20),
- une structure élévatrice (6) montée sur le châssis (2) et supportant la plate-forme de travail (20),
- un pupitre de commande (30) permettant de :
∘ commander la structure élévatrice (6) pour déplacer la plate-forme (20) jusqu'à une position de travail en hauteur, et
∘ déplacer sélectivement le châssis (2) au sol dans la direction avant (F_{AV}) et dans la direction arrière (F_{AR}), et
**caractérisée en ce que** la nacelle élévatrice comprend en outre un système de signalisation visuelle pour indiquer la direction de déplacement du châssis au sol sélectionnée au pupitre de commande (30) parmi les directions avant et arrière (F_{AV}, F_{AR}) par activation sur un dispositif de visualisation (40, 40'), de préférence un écran d'affichage (40), d'au moins une indication visuelle (A_{AV}, A_{AR}; 45.i)
∘ localisée du côté correspondant à la direction de déplacement sélectionnée (F_{AV}, F_{AR}) sur une visualisation de la direction azimutale (2", 45.i) du châssis (2) par rapport au dispositif de visualisation (40'), ou
∘ ayant une forme orientée (A_{AV}, A_{AR}) selon la direction azimutale du châssis (2) par rapport au dispositif de visualisation (40) et pointant dans la direction correspondant à la direction de déplacement sélectionnée (F_{AV}, F_{AR}),
le système de signalisation visuelle comprenant au moins un capteur pour déterminer l'azimut (A) du châssis par rapport au dispositif de visualisation, le système de signalisation visuelle étant de préférence configuré pour afficher sur le dispositif de visualisation une représentation graphique (2') du châssis (2) orientée selon la direction azimutale du châssis (2) par rapport au dispositif de visualisation (40) et le dispositif de visualisation (40 ; 40') étant de préférence fixé au pupitre de commande (30).

13. Nacelle élévatrice selon l'une quelconque des revendications 1 à 12, dans laquelle le pupitre de commande (130) est librement déplaçable par l'opérateur en cours d'utilisation de la nacelle élévatrice, le pupitre de commande étant préférentiellement prévu pour être accroché de manière amovible en différents endroits d'un garde-corps (122) de la plate-forme de travail (120).

14. Nacelle élévatrice selon l'une quelconque des revendications 1 à 5 ou 12, dans laquelle la structure élévatrice comprend :
∘ une tourelle (8) montée pivotante autour d'un axe vertical (Z) sur le châssis (2) ; et
∘ un mécanisme de levage (10, 12) de la plate-forme de travail (20) lequel est monté sur la tourelle (8),
le pupitre de commande (30) étant de préférence monté fixement sur la plate-forme de travail (20) ou avec une orientation fixe par rapport à celle-ci.

15. Nacelle élévatrice selon l'une quelconque des revendications 1 à 14, dans laquelle l'azimut du châssis (2 ; 102) par rapport au pupitre de commande (20 ; 120) est susceptible de varier en cours d'utilisation de la nacelle élévatrice.

16. Nacelle élévatrice selon l'une quelconque des revendications 1 à 15, dans laquelle :
- le pupitre de commande (30 ; 130) comprend au moins un organe de commande (32 ; 132) de déplacement au sol actionnable par l'opérateur pour déplacer sélectivement le châssis au sol dans la direction avant (F_{AV}) et dans la direction arrière (F_{AR}), et
- la plate-forme de travail (20 ; 120) ou le pupitre de commande (30 ; 130) comprend un organe de validation (50) actionnable par l'opérateur,
dans laquelle la nacelle élévatrice inhibe le déplacement du châssis (2) au sol en fonction de l'actionnement ou l'absence d'actionnement de l'organe de validation (50), le système de signalisation visuelle indiquant la direction de déplacement (F_{AV}, F_{AR}) sélectionnée à l'au moins un organe de commande (32 ; 132) par activation de l'au moins une indication visuelle malgré l'inhibition du déplacement du châssis (2) au sol.

## Patentansprüche

1. Selbstfahrende Hubarbeitsbühne (1; 101), umfassend:
- ein Fahrgestell (2; 102) mit einer Längsachse (L), entlang der das Fahrgestell fähig ist sich am Boden in einer Vorwärtsrichtung (F_{AV}) und einer Rückwärtsrichtung (F_{AR}), entgegengesetzt zur Vorwärtsrichtung, zu bewegen;
- eine Arbeitsplattform (20; 120),
- eine Hebestruktur (6; 110), die an dem Fahrgestell montiert ist und die Arbeitsplattform trägt,
- ein Steuerpult (30; 130), es erlaubend:
∘ die Hebestruktur zu steuern, um die Plattform bis zu einer Arbeitsposition in der Höhe zu bewegen, und
∘ das Fahrgestell am Boden selektiv in der Vorwärtsrichtung (F_{AV}) und in der Rückwärtsrichtung (F_{AR}) zu bewegen,
**dadurch gekennzeichnet, dass** die Hubarbeitsbühne ferner ein optisches Signalisierungssystem zur Anzeige der am Steuerpult (30; 130) unter den Vorwärts- und Rückwärtsrichtungen (F_{AV}, F_{AR}) gewählten Bewegungsrichtung des Fahrgestells am Boden durch Aktivieren mindestens einer optischen Anzeige (63a, 63b, 64a, 64b; 70.i; 72; 163a, 163b, 164a, 164b):
∘ befindlich an der Seite des Fahrgestells, die der ausgewählten Bewegungsrichtung entspricht, oder
∘ mit einer Richtungsform, die in die gewählte Bewegungsrichtung zeigt.

2. Hubarbeitsbühne nach Anspruch 1, bei welcher das optische Signalisierungssystem mindestens einen mit dem Fahrgestell verbundenen optischen Indikator (63a, 63b, 64a, 64b) umfasst, den das optische Signalisierungssystem aktiviert, um eine optische Anzeige von mindestens einer der Vorwärts- und Rückwärtsrichtungen (F_{AV}, F_{AR}) zu liefern.

3. Hubarbeitsbühne nach Anspruch 2, bei welcher das optische Signalisierungssystem umfasst:
- einen ersten und einen zweiten optischen Indikator (63a, 63b), mit dem Fahrgestell verbunden und an der Vorderseite (2_{AV}) des Fahrgestells befindlich, und
- einen dritten und einen vierten optischen Indikator (64b, 64a), mit dem Fahrgestell verbunden und an der Rückseite (2_{AR}) des Fahrgestells befindlich,
wobei:
- das optische Signalisierungssystem den ersten und den dritten optische Indikator (63a, 64b) aktiviert, um jeweils eine optische Anzeige der Vorwärtsrichtung (FAV) in der Form einer der Vorwärtsrichtung (FAV) zeigenden Richtungsform zu liefern, und
- das optische Signalisierungssystem den zweiten und den vierten optische Indikator (63b, 64a) aktiviert, um jeweils eine optische Anzeige der Rückwärtsrichtung (FAR) in der Form einer der Rückwärtsrichtung (FAR) zeigenden Richtungsform zu liefern.

4. Hubarbeitsbühne nach Anspruch 3, bei welcher:
- der erste und der vierte optische Indikator (63a, 64a) ferner befindlich sind hin zur gleichen lateralen Seite des Fahrgestells (2), und
- der zweite und der dritte optische Indikator (63b, 64b) ferner befindlich sind an der anderen lateralen Seite des Fahrgestells (2).

5. Hubarbeitsbühne nach Anspruch 4, bei welcher:
- das Fahrgestell (2) an zwei Vorderrädern (3a, 3b) und zwei Hinterrädern (4a) montiert ist, vermittels welcher sich das Fahrgestell am Boden bewegt, und
- jeder der optischen Indikatoren (63a, 63b, 64a, 64b) über einem der jeweiligen Räder eingerichtet ist.

6. Hubarbeitsbühne nach Anspruch 5, bei welcher:
- die Hebestruktur umfasst:
∘ einen Turm (8), der schwenkbar um eine vertikale Achse (Z) an dem Fahrgestell (2) montiert ist; und
∘ einen Hebemechanismus (10, 12) für die Arbeitsbühne (20), an dem Turm (8) montiert, wobei die Arbeitsbühne in Bezug auf den Turm zu einer Seite hin versetzt ist, und
- die optischen Indikatoren (63a, 63b, 64a), 64b) so befindlich sind, dass mindestens zwei von einander umfänglich zu dem Fahrgestell (2) an der der Plattform (20) entsprechenden Seite überlagerungsfrei vom Turm (8) sind, unabhängig von der Ausrichtung des Turms (8) in Bezug auf das Fahrgestell (2).

7. Hubarbeitsbühne nach einem der Ansprüche 1 bis 6, bei welcher:
- die Hebestruktur (6) umfasst:
∘ einen Turm (8), der schwenkbar um eine vertikale Achse (Z) an dem Fahrgestell (2) montiert ist; und
∘ einen Hebemechanismus (10, 12) für die Arbeitsbühne (20), an dem Turm (8) montiert, und
- das optische Signalisierungssystem umfasst:
∘ mindestens einen Sensor zur Bestimmung der Ausrichtung des Turmes (8) mit Bezug auf das Fahrgestell (2), und
∘ mindestens einen an dem Turm eingerichteten optischen Indikator (70.i; 72), den das optische Signalisierungssystem aktiviert, um eine optische Anzeige von mindestens einer der Vorwärts- und Rückwärtsrichtungen zu liefern.

8. Hubarbeitsbühne nach Anspruch 7, bei welcher das optische Signalisierungssystem eine Vielzahl von optischen Indikatoren (70.i) umfasst, die an dem Turm (8) eingerichtet und winkelmäßig um die vertikale Achse (Z) des Turms verteilt sind, wobei das Signalisierungssystem eine optische Anzeige von mindestens einer der Vorwärts- und Rückwärtsrichtungen (F_{AV}, F_{AR}) durch Aktivieren mindestens eines der optischen Indikatoren (70.i), befindlich an der entsprechende Längsseite (2_{AR}, 2_{AV}) des Fahrgestells (2).

9. Hubarbeitsbühne nach einem der Ansprüche 1 bis 5, bei welcher:
- die Ausrichtung der Arbeitsbühne (120) in Bezug auf das Fahrgestell (102) festgelegt ist, vorzugsweise ist die Hebestruktur (110) ein Scherenmechanismus, und
- das optische Signalisierungssystem umfasst mindestens einen optischen Indikator (163a, 163b, 164a, 164b), mit der Arbeitsbühne verbunden, vom optischen Signalisierungssystem aktiviert, um eine optische Anzeige mindestens einer der Vorwärts- und Rückwärtsrichtungen (F_{AV}, F_{AR}) zu liefern, vorzugsweise ist der mindestens einen optischen Indikator an Leisten eingerichtet oder in diese integriert, die den unteren Teil eines Geländers (122) der Arbeitsbühne (120) umrahmen, noch bevorzugter ist der mindestens eine optischen Indikator die Leisten durchdringend oder innerhalb und außerhalb der entsprechenden Leiste dupliziert eingerichtet, um sowohl von der Innen- als auch von der Außenseite der Arbeitsplattform (120) sichtbar zu sein.

10. Hubarbeitsbühne nach Anspruch 9, bei welcher:
- das optische Signalisierungssystem mindestens zwei Leuchtindikatoren (163a, 163b, 164a, 164b) umfasst, die mit der Arbeitsbühne (120) verbunden sind, wobei einer in die Vorwärtsrichtung (FAV) und der andere in die Rückwärtsrichtungen (FAR) zeigt, und
- das optische Signalisierungssystem vorgesehen ist, um denjenigen der Indikatoren (163a, 163b, 164a, 164b), der in die am Steuerpult (130) unter den Vorwärts- und Rückwärtsrichtungen (FAV, FAR) gewählte Bewegungsrichtung zeigt zu aktivieren, während der andere inaktiv gehalten wird.

11. Hubarbeitsbühne nach Anspruch 9 oder 10, bei welcher:
- das optische Signalisierungssystem vier mit der Arbeitsbühne (120) verbundene Leuchtindikatoren (163a, 163b, 164a, 164b) umfasst, von denen zwei zur Vorderseite der Bühne (120) hin eingerichtet sind und jeweils in eine andere der Vorwärts- und Rückwärtsrichtungen (FAV, FAR) zeigen, und die beiden anderen zur Rückseite der Plattform (120) hin eingerichtet sind und jeweils eine andere der Vorwärts- und Rückwärtsrichtungen (FAV, FAR) zeigen, und
- das optische Signalisierungssystem vorgesehen ist, um diejenigen der vier Indikatoren (163a, 163b, 164a, 164b) zu aktivieren, die in die am Steuerpult (130) unter den Vorwärts- und Rückwärtsrichtungen (FAV, FAR) gewählte Bewegungsrichtung zeigen zu aktivieren, während die anderen inaktiv gehalten werden.

12. Selbstfahrende Hubarbeitsbühne (1; 101), umfassend:
- ein Fahrgestell (2; 102) mit einer Längsachse (L), entlang der das Fahrgestell fähig ist sich am Boden in einer Vorwärtsrichtung (FAV) und einer Rückwärtsrichtung (FAR), entgegengesetzt zur Vorwärtsrichtung, zu bewegen;
- eine Arbeitsplattform (20; 120),
- eine Hebestruktur (6; 110), die an dem Fahrgestell montiert ist und die Arbeitsplattform trägt,
- ein Steuerpult (30; 130), es erlaubend:
∘ die Hebestruktur zu steuern, um die Plattform bis zu einer Arbeitsposition in der Höhe zu bewegen, und
∘ das Fahrgestell am Boden selektiv in der Vorwärtsrichtung (F_{AV}) und in der Rückwärtsrichtung (F_{AR}) zu bewegen, und
**dadurch gekennzeichnet, dass** die Hubarbeitsbühne ferner ein optisches Signalisierungssystem zur Anzeige der am Steuerpult (30; 130) unter den Vorwärts- und Rückwärtsrichtungen (F_{AV}, F_{AR}) gewählten Bewegungsrichtung des Fahrgestells am Boden durch Aktivieren mindestens einer optischen Anzeige (A_{AV}, A_{AR}; 45.i) an mindestens einer Anzeigeeinrichtung (40, 40'), vorzugsweise einem Anzeigebildschirm (40)
∘ befindlich an der der gewählten Bewegungsrichtung (F_{AV}, F_{AR}) entsprechenden Seite an einer Anzeige der azimutalen Richtung (2", 45.i) des Fahrgestells (2) relativ zur Anzeigevorrichtung (40'), oder
∘ mit einer Richtungsform (A_{AV}, A_{AR}), entsprechend der Azimut-Richtung des Fahrgestells (2) in Bezug auf die Anzeigeeinrichtung (40) und in die Richtung zeigt, die der gewählten Bewegungsrichtung (F_{AV}, F_{AR}) entspricht,
wobei das optische Signalisierungssystem mindestens einen Sensor zur Bestimmung des Azimuts (A) des Fahrgestells in Bezug auf die Anzeigeeinrichtung umfasst, vorzugsweise ist das optische Signalisierungssystem ausgebildet um an der Anzeigeeinrichtung eine grafische Darstellung (2') des Fahrgestells (2), ausgerichtet in der Azimut-Richtung des Fahrgestells (2) in Bezug auf die Anzeigevorrichtung (40) anzuzeigen, und wobei die Anzeigevorrichtung (40; 40') vorzugsweise am Steuerpult (30) befestigt ist.

13. Hubarbeitsbühne nach einem der Ansprüche 1 bis 12, bei welcher das Steuerpult (130) während der Benutzung der Hubarbeitsbühne durch den Benutzer frei beweglich ist, vorzugsweise ist das Steuerpult vorgesehen, um an verschiedenen Stellen an einem Geländer (122) der Arbeitsbühne (120) lösbar aufgehängt zu werden/sein.

14. Hubarbeitsbühne nach einem der Ansprüche 1 bis 5 oder 12, bei welcher die Hebestruktur umfasst:
∘ o einen Turm (8), der schwenkbar um eine vertikale Achse (Z) an dem Fahrgestell (2) montiert ist; und
∘ o einen Hebemechanismus (10, 12) der Arbeitsbühne (20), der an dem Turm (8) montiert ist,
vorzugsweise ist das Steuerpult (30) fest an der Arbeitsplattform (20) oder mit einer festen Ausrichtung relativ diesbezüglich montiert.

15. Hubarbeitsbühne nach einem der Ansprüche 1 bis 14, bei welcher der Azimut des Fahrgestells (2; 102) in Bezug auf das Steuerpult (20; 120) während der Benutzung der Hubarbeitsbühne variieren kann.

16. Hubarbeitsbühne nach einem der Ansprüche 1 bis 15, bei welcher:
- das Steuerpult (30; 130) mindestens ein Boden-Bewegungs-Steuerelement (30; 130) umfasst, benutzerbedienbar zum selektiven Bewegen des Fahrgestells am Boden in der Vorwärtsrichtung (F_{AV}) und in der Rückwärtsrichtung (F_{AR}), und
- die Arbeitsplattform (20; 120) oder das Steuerpult (30; 132) ein benutzerbedienbares Validierungselement (50) umfasst,
wobei die Hubarbeitsbühne die Bewegung des Fahrgestells (2) am Boden in Abhängigkeit von der Betätigung oder dem Fehlen der Betätigung des Validierungselements (50) hemmt, wobei das optische Signalisierungssystem die gewählte Bewegungsrichtung (F_{AV}, F_{AR}) dem mindestens einen Steuerelement (32; 132) anzeigt, indem es die mindestens eine optische Anzeige trotz der Hemmung der Bewegung des Fahrgestells (2) am Boden aktiviert.

## Claims

1. A self-propelled aerial work platform (1; 101) comprising:
- a chassis (2; 102) having a longitudinal axis (L) along which the chassis is able to move on the ground in a forward direction (F_{AV}) and in a backward direction (F_{AR}) opposite to the forward direction,
- a work platform (20; 120),
- a lifting structure (6; 110) mounted on the chassis and supporting the work platform,
- a control console (30; 130) allowing to:
∘ control the lifting structure for moving the platform to a working position at a height, and
∘ selectively move the chassis on the ground in the forward direction (F_{AV}) and the backward direction (F_{AR}),
chraracterized in that the aerial work platform further comprises a visual signalling system for indicating the direction of movement of the chassis on the ground selected at the control station (30; 130) from the forward and backward directions (F_{AV}, F_{AR}) by activating at least one visual indication (63a, 63b, 64a, 64b ; 70.i ; 72 ; 163a, 163b, 164a, 164b):
∘ located on the side of the chassis that corresponds to the direction of movement selected, or
∘ having an oriented form pointing in the direction of movement selected.

2. The self-propelled aerial work platform according to claim 1, wherein the visual signalling system comprises at least one visual indicator (63a, 63b, 64a, 64b) secured to the chassis that the visual signalling system activates to procure the visual indication of at least one of the forward and backward directions (F_{AV}, F_{AR}).

3. The aerial work platform according to claim 2, wherein the visual signalling system comprises:
- a first and a second visual indicator (63a, 63b) secured to the chassis and located on the front side (2_{AV}) of the chassis, and
- a third and a fourth visual indicator (64b, 64a) secured to the chassis and located on the rear side (2_{AR}) of the chassis,
wherein:
- the visual signalling system activates the first and third visual indicators (63a, 64b) in order each to procure the visual indication of the forward direction (F_{AV}) in the form of an oriented form pointing in the forward direction (F_{AV}), and
- the visual signalling system activates the second and fourth visual indicators (63b, 64a) in order each to procure the visual indication of the backward direction (F_{AR}) in the form of an oriented form pointing in the backward direction (F_{AR}).

4. The aerial work platform according to claim 3, wherein:
- the first and fourth visual indicators (63a, 64a) are further located towards a same lateral side of the chassis (2), and
- the second and third visual indicators (63b, 64b) are further located towards the other lateral side of the chassis (2).

5. The aerial work platform according to claim 4, wherein:
- the chassis (2) is mounted on two front wheels (3a, 3b) and two rear wheels (4a, 4b) by means of which the chassis moves on the ground, and
- each of said visual indicators (63a, 63b, 64a, 64b) is arranged above a respective one of the wheels.

6. The aerial work platform according to claim 5, wherein:
- the lifting structure comprises:
∘ a turret (8) mounted so as to pivot about a vertical axis (Z) on the chassis (2); and
∘ a mechanism (10, 12) for lifting the work platform (20) which is mounted on the turret (8), the work platform being offset to one side with respect to the turret, and
- said visual indicators (63a, 63b, 64a, 64b) are located so that at least two of them following each other on the periphery of the chassis (2) on the side corresponding to the platform (20) are free from any superimposition by the turret (8), whatever the orientation of the turret (8) with respect to the chassis (2).

7. The aerial work platform according to any of claims 1 to 6, wherein:
- the lifting structure (6) comprises:
∘ a turret (8) mounted so as to pivot about a vertical axis (Z) on the chassis (2); and
∘ a mechanism (10, 12) for lifting the work platform (20) which is mounted on the turret (8), and
- the visual signalling system comprises:
∘ at least one sensor for determining the orientation of the turret (8) with respect to the chassis (2), and
∘ at least one visual indicator (70.i; 72) arranged on the turret that the visual signalling system activates in order to procure the visual indication of at least one of the forward and backward directions.

8. The aerial work platform according to claim 7, wherein the visual signalling system comprises a plurality of visual indicators (70.i) arranged on the turret (8) and distributed angularly around the vertical axis (Z) of the turret, the signalling system procuring the visual indication of at least one of the forward and backward directions (F_{AV}, F_{AR}) by activating at least one of the visual indicators (70.i) located on the corresponding longitudinal side (2_{AR}, 2_{AV}) of the chassis (2).

9. The aerial work platform according to any of claims 1 to 5, wherein:
- the orientation of the work platform (120) is fixed with respect to the chassis (102), the lifting structure (110) being preferentially a scissor mechanism, and
- the visual signalling system comprises at least one visual indicator (163a, 163b, 164a, 164b) secured to the work platform that the visual signalling system activates to procure the visual indication of at least one of the forward and backward directions (F_{AV}, F_{AR}), said at least one visual indicator being preferentially arranged on or integrated in toeboards framing the bottom of a guardrail (122) of the work platform (120), said at least one visual indicator being even more preferentially arranged passing through the toeboards or duplicated inside and outside the corresponding toeboard in order to be visible both from the inside and the outside of the work platform (120).

10. The aerial work platform according to claim 9, wherein:
- the visual signalling system comprises at least two luminous indicators (163a, 163b, 164a, 164b) secured to the work platform (120), one pointing in the forward direction (F_{AV}) and the other pointing in the backward direction (F_{AR}), and
- the visual signalling system is designed to activate whichever of the indicators (163a, 163b, 164a, 164b) points in the direction of movement selected at the control console (130) from the forward and backward directions (F_{AV}, F_{AR}) while the other is maintained inactive.

11. The aerial work platform according to claim 9 or claim 10, wherein:
- the visual signalling system comprises four luminous indicators (163a, 163b, 164a, 164b) secured to the work platform (120), two of them being arranged towards the front of the platform (120) and each pointing in another of the forward and backward directions (F_{AV}, F_{AR}) and the other two being arranged towards the rear of the platform (120) and each pointing in another of the forward and backward directions (F_{AV}, F_{AR}), and
- the visual signalling system is designed to activate those of the four indicators (163a, 163b, 164a, 164b) that point in the direction of movement selected at the control console (130) from the forward and backward directions (F_{AV}, F_{AR}) while the others are maintained inactive.

12. A self-propelled aerial work platform comprising:
- a chassis (2) having a longitudinal axis (L) along which the chassis is able to move on the ground in a forward direction (F_{AV}) and in a backward direction (F_{AR}) opposite to the forward direction,
- a work platform (20),
- a lifting structure (6) mounted on the chassis (2) and supporting the work platform (20),
- a control console (30) allowing to:
∘ control the lifting structure (6) for moving the platform (20) to a working position at a height, and
∘ selectively move the chassis (2) on the ground in the forward direction (F_{AV}) and the backward direction (F_{AR}), and
**characterized in that** the aerial work platform further comprises a visual signalling system for indicating the direction of movement of the chassis on the ground selected at the control console (30) from the forward and backward directions (F_{AV}, F_{AR}) by activation on a display device (40, 40'), preferably a display screen (40), of at least one visual indication (A_{AV}, A_{AR}; 45.i)
∘ located on the side corresponding to the selected direction of movement (F_{AV}, F_{AR}) on a display of the azimuthal direction (2", 45.i) of the chassis (2) with respect to the display device (40'), or
∘ having a form oriented (A_{AV}, A_{AR}) in the azimuthal direction of the chassis (2) with respect to the display device (40) and pointing in the direction corresponding to the direction of movement selected (F_{AV}, F_{AR}),
the visual signalling system comprising at least one sensor for determining the azimuth (A) of the chassis with respect to the display device, the visual signalling system being preferentially configured to display on the display device a graphical representation (2') of the chassis (2) oriented in the azimuthal direction of the chassis (2) with respect to the display device (40) and the display device (40; 40') being preferentially fixed to the control console (30).

13. The aerial work platform according to any of claims 1 to 12, wherein the control console (130) is freely movable by the operator during use of the aerial work platform, the control console preferably being designed to be attached removably at various places on the guardrail (122) of the work platform (120).

14. The aerial work platform according to any of claims 1 to 5 or 12, wherein the lifting structure comprises:
∘ a turret (8) mounted so as to pivot about a vertical axis (Z) on the chassis (2); and
∘ a mechanism (10, 12) for lifting the work platform (20) which is mounted on the turret (8)
the control console (30) being preferentially mounted fixedly on the work platform (20) or with an orientation fixed with respect thereto.

15. The aerial work platform according to any of claims 1 to 14, wherein the azimuth of the chassis (2; 102) with respect to the control console (20; 120) is able to vary during use of the aerial work platform.

16. The aerial work platform according to any of claims 1 to 15, wherein:
- the control console (30; 130) comprises at least one member (32; 132) for controlling movement on the ground actuatable by the operator in order to selectively move the chassis on the ground in the forward direction (F_{AV}) and in the backward direction (F_{AR}), and
- the work platform (20; 120) or the control console (30; 130) comprises a validation member (50) that can be actuated by the operator,
wherein the aerial work platform inhibits the movement of the chassis (2) on the ground according to the actuation or absence of actuation of the validation member (50), the visual signalling system indicating the direction of movement (F_{AV}, F_{AR}) selected at the at least one control member (32; 132) by activation of the at least one visual indication despite the inhibition of the movement of the chassis (2) on the ground.
